# NEUE EUROPÄISCHE PATENTSCHRIFT

(11) **EP 3 450 343 B2**
(45) Veröffentlichungstag und Bekanntmachung des Hinweises auf die Entscheidung über den Einspruch: **12.06.2024**
(45) Hinweis auf die Patenterteilung: 06.01.2021
(21) Anmeldenummer: 18189980.8
(22) Anmeldetag: 21.08.2018
(51) Int. Cl.: B65D 30/08, B65D 33/02, B65D 33/10

(54) **KUNSTSTOFFTRAGETASCHE UND HALTESCHLAUFE FÜR EINE KUNSTSTOFFTRAGETASCHE**
PLASTIC BAG AND HAND STRAP FOR A PLASTIC BAG
SAC À POIGNÉE EN MATIÈRE PLASTIQUE ET BOUCLE DE RETENUE POUR UN SAC À POIGNÉE EN MATIÈRE PLASTIQUE

(30) Priorität: 28.08.2017 DE 202017105180 U
(43) Veröffentlichungstag der Anmeldung: 06.03.2019
(60) Teilanmeldung: 20194265.3
(73) Patentinhaber: Papier-Mettler KG, 54497 Morbach (DE)
(72) Erfinder: DONNER, Georg, 54497 Morbach (DE); TROSSEN, Wolfgang, 54497 Morbach (DE)
(74) Vertreter: Metten, Karl-Heinz

(56) Entgegenhaltungen:
- EP-A1- 0 457 019
- EP-A1- 0 758 613
- DE-A1- 1 457 232
- DE-A1- 2 853 061
- DE-A1- 3 144 702
- DE-A1- 4 012 897
- DE-T2- 69 009 906
- DE-U1- 8 705 849
- DE-U1- 29 612 070
- DE-U1-202005 010 674
- FR-A5- 2 164 047
- KR-A- 20170 005 995
- NL-A- 7 000 483

## Beschreibung

Die vorliegende Erfindung betrifft eine wiederverwendbare Kunststofftragetasche für eine Kunststofftragetasche.

Tragetaschen, wie sie üblicherweise vom Handel für den Kunden zum Transport von Waren zur Verfügung gestellt werden, sind regelmäßig aus Plastik oder Papier gefertigt. Waren diese Transportbehältnisse bislang vielfach für den einmaligen Gebrauch vorgesehen, werden nunmehr verstärkt geeignete Transportgebinde nachgefragt, die wiederverwendet werden können. Hierbei sind wiederverwendbare Kunststofftragetaschen häufig größer dimensioniert und verfügen über separat an Vorder- und Rückwand angebrachte Trageschlaufen. Solche herkömmlichen Schlaufentaschen finden sich beispielsweise in der DE 101 16 920 A1, der WO 01/51372 A1 und der DE 40 12 897 A1 offenbart.

EP 0 457 019 A1 betrifft eine aus thermoplastischem Kunststoff gefertigte Tragetasche mit unterschiedlich langen nach innen eingeklappten Randbereichen und dort angebrachten Trageschlaufen. Die Tragetasche soll sich durch eine einfache und kostengünstige Herstellweise und Entsorgbarkeit auszeichnen.

DE 87 05 849 U1 betrifft eine Verkaufsverpackung umfassend nach innen eingeklappte Randbereiche an die Tragegriffe befestigt sind und deren Vorder- und Rückseite nach oben hin mit einer Abreißperforation ausgestattet sind. Die Aufgabe der Verkaufsverpackung besteht darin ein erstmaliges Öffnen durch eine Siegelfunktion zu indizieren und gleichzeigt wiederverwendbar zu sein.

DE 14 57 232 A1 betrifft eine widerstandsfähige, aus thermoplastischem Kunststoff gefertigte, doppellagige Tragetasche mit nach innen gefalteten Tragetaschenrändern bestehend aus drei und mehr Lagen, in die ein Tragegriff integriert ist.

DE 296 12 070 U1 betrifft eine doppellagige Tragetasche für Gefriergut, die über einen Tragegriff verfügt, der durch einen in einer umklappbaren Vorder- oder Rückwand befindlichen Schlitz geführt werden kann, sodass die Tragetaschenöffnung verschlossen wird.

Insbesondere bei größer dimensionierten wiederverwendbaren Kunststofftragetaschen kann mitunter eine hinreichende Belastbarkeit bzw. Tragefestigkeit aufgrund mechanischen Verschleißes problematisch sein. Dabei ist ein gewichtsbedingtes Ab- oder Durchreißen einer Trageschlaufe oder im Bereich der Anbringung der Trageschlaufe nicht hinnehmbar. Nicht zuletzt aus diesem Grund stellen die gewerblichen Abnehmer von Schlaufentragetaschen, beispielsweise Kaufhäuser und Großmarktketten, sehr hohe Anforderungen an die Qualität solcher Taschen. Nachteilig an den bekannten größer dimensionierten Schlaufentragetaschen ist noch stets deren recht aufwendige Herstellung.

Der vorliegenden Erfindung lag daher die Aufgabe zugrunde, Tragetaschen aus Kunststoff, insbesondere wiederverwendbare Kunststofftragetaschen, zur Verfügung zu stellen, die nicht mit den Nachteilen der Tragetaschen des Stands der Technik behaftet und die insbesondere für den wiederholten zuverlässigen Transport schwerer Lasten geeignet sind und die sich zudem auf einfache und kostengünstige Weise in maschineller Serienfertigung herstellen lassen.

Demgemäß wurde eine Kunststofftragetasche mit einem geschlossenen oder im Wesentlichen geschlossenen Bodenende und einem gegenüberliegenden Öffnungsende gefunden, umfassend eine Vorderwand und eine Rückwand, jeweils mit einem ersten Seitenrand und einem gegenüberliegenden zweiten Seitenrand sowie einem Öffnungsrand und einem Bodenrand, wobei die Vorderwand und die Rückwand im Bereich ihrer ersten und zweiten Seitenränder und ihrer Bodenränder mindestens abschnittsweise direkt oder über Seitenwände oder Seitenfalten und/oder eine Bodenfalte miteinander verbunden sind, sowie mindestens eine mit der Vorderwand und mindestens eine mit der Rückwand verbundene Halteschlaufe mit jeweils einem ersten und einem zweiten Anbindungsbereich, wobei die Vorder- und Rückwand mehrlagig, insbesondere doppellagig, ausgestaltet sind, umfassend mindestens eine innenliegende Lage, insbesondere eine Innenlage, und eine Außenlage, undwobei die Vorder- und/oder Rückwand im Bereich des Öffnungsendes einen, insbesondere sich bis zum Öffnungsende erstreckenden oder dieses umfassenden, Verstärkungsbereich aufweist, enthaltend mindestens einen innen- oder außenseitig an der Vorderwand befestigten und mindestens einen innen- oder außenseitig an der Rückwand befestigten und sich von oder beabstandet von dem ersten Seitenrand in Richtung des oder bis zum zweiten Seitenrand erstreckenden mehrlagigen, insbesondere doppellagigen, Kunststofffolienstreifen, wobei
die mit der Vorderwand und die mit der Rückwand verbundene Halteschlaufe jeweils in ihren ersten und zweiten Anbindungsbereichen mit dem mehrlagigen Kunststofffolienstreifen des Verstärkungsbereichs und auch mit der mindestens einen innenliegenden Lage, insbesondere der Innenlage, oder der Außenlage verschweißt und/oder verklebt sind und wobei
der mehrlagige Kunststofffolienstreifen des Verstärkungsbereichs der Vorderwand mit der Innen- oder Außenlage, insbesondere von oder beabstandet von dem ersten Seitenrand in Richtung des oder bis zum zweiten Seitenrand, mittels Verschweißung und/oder Verklebung, befestigt ist und wobei
der mehrlagige Kunststofffolienstreifen des Verstärkungsbereichs der Rückwand mit der Innen- oder Außenlage, insbesondere von oder beabstandet von dem ersten Seitenrand in Richtung des oder bis zum zweiten Seitenrand, mittels Verschweißung und/oder Verklebung, befestigt ist,
wobei die mit der Vorderwand über ihre ersten und zweiten Anbindungsbereiche verbundene Halteschlaufe und die mit der Rückwand über ihre ersten und zweiten Anbindungsbereich verbundene Halteschlaufe im Bereich vom jeweiligen ersten bis zum zweiten Anbindungsbereich zumindest abschnittsweise einen ersten flexiblen schlauchförmigen Hohlkörper oder einen mehrlagigen, keinen Hohlkörper bildenden Materialstreifen, insbesondere Kunststoffmaterialstreifen, aufweist, der zumindest abschnittsweise, insbesondere im Wesentlichen vollständig, von einem zweiten flexiblen schlauchförmigen Hohlkörper umhüllt ist.

Mit der vorangehend geschilderten erfindungsgemäßen Ausführungsform einer Kunststofftragetasche wird neben einem hervorragenden Tragekomfort auch eine verbesserte mechanische Belastbarkeit insbesondere von wiederverwendbaren Kunststofftragetasche sichergestellt. Sowohl die Halteschlaufe als solche wie auch deren Anbindung an den Korpus der Kunststofftragetasche zeichnen sich durch eine besondere Reißfestigkeit aus.

Des Weiteren wurde eine Kunststofftragetasche mit einem geschlossenen oder im Wesentlichen geschlossenen Bodenende und einem gegenüberliegenden Öffnungsende gefunden, umfassend eine Vorderwand und eine Rückwand, jeweils mit einem ersten Seitenrand und einem gegenüberliegenden zweiten Seitenrand sowie einem Öffnungsrand und einem Bodenrand, wobei die Vorderwand und die Rückwand im Bereich ihrer ersten und zweiten Seitenränder und ihrer Bodenränder mindestens abschnittsweise direkt oder über Seitenwände oder Seitenfalten und/oder eine Bodenfalte miteinander verbunden sind, sowie mindestens eine mit der Vorderwand und mindestens eine mit der Rückwand verbundene Halteschlaufe mit jeweils einem ersten und einem zweiten Anbindungsbereich, wobei die Vorder- und Rückwand mehrlagig, insbesondere doppellagig, ausgestaltet sind, umfassend mindestens eine innenliegende Lage, insbesondere eine Innenlage, und eine Außenlage, und dass die Vorder- und/oder Rückwand im Bereich des Öffnungsendes einen, insbesondere sich bis zum Öffnungsende erstreckenden oder dieses umfassenden, Verstärkungsbereich aufweist, enthaltend mindestens einen innen- oder außenseitig an der Vorderwand befestigten und mindestens einen innen- oder außenseitig an der Rückwand befestigten und sich von oder beabstandet von dem ersten Seitenrand in Richtung des oder bis zum zweiten Seitenrand erstreckenden mehrlagigen, insbesondere doppellagigen, Kunststofffolienstreifen, wobei die mit der Vorderwand und die mit der Rückwand verbundene Halteschlaufe jeweils in ihren ersten und zweiten Anbindungsbereichen mit dem mehrlagigen Kunststofffolienstreifen des Verstärkungsbereichs und auch mit der mindestens einen innenliegenden Lage, insbesondere der Innenlage, oder der Außenlage verschweißt und/oder verklebt sind, wobei der mehrlagige Kunststofffolienstreifen des Verstärkungsbereichs der Vorderwand mit der Innen- oder Außenlage, insbesondere von oder beabstandet von dem ersten Seitenrand in Richtung des oder bis zum zweiten Seitenrand, mittels Verschweißung und/oder Verklebung, befestigt ist, wobei der mehrlagige Kunststofffolienstreifen des Verstärkungsbereichs der Rückwand mit der Innen- oder Außenlage, insbesondere von oder beabstandet von dem ersten Seitenrand in Richtung des oder bis zum zweiten Seitenrand, mittels Verschweißung und/oder Verklebung, befestigt ist, wobei sich an die Außenlage ein Fortsetzungsabschnitt anschließt, wobei der Fortsetzungsabschnitt den Kunststofffolienstreifen des Verstärkungsbereichs umfasst oder darstellt, wobei dieser, insbesondere mindestens doppellagige, Fortsetzungsabschnitt entlang einer Erstreckung von oder beabstandet von dem ersten Seitenrand in Richtung des oder bis zum zweiten Seitenrand mit der Außenseite der mindestens einen innenliegenden Lage, insbesondere der Innenlage, sowie gegebenenfalls der Außenlage verschweißt und/oder verklebt ist, insbesondere mit einer kontinuierlichen Längsschweißung, und wobei der Fortsetzungsabschnitt sich mindestens abschnittsweise entlang der Außenseite der mindestens einen innenliegenden Lage, insbesondere der Innenlage, erstreckt und an dieser anliegt oder anlegbar ist.

Mit der vorangehend geschilderten erfindungsgemäßen Ausführungsform einer Kunststofftragetasche wird eine Verstärkung im oberen Randbereich verfügbar gemacht, die mechanisch starken Belastungen standhält und eine sehr wirkungsvolle Grundlage für die Anbindung von Halteschlaufen liefert. Auch ist die mit einem derartigen Verstärkungsbereich versehene Kunststofftragetasche bequem und unproblematisch zu öffnen.

In einer bevorzugten Ausführungsform der vorangehend spezifizierten Kunststofftragetasche kann dabei vorgesehen sein, dass die mit der Vorderwand über ihre ersten und zweiten Anbindungsbereiche verbundene Halteschlaufe und die mit der Rückwand über ihre ersten und zweiten Anbindungsbereich verbundene Halteschlaufe im Bereich vom jeweiligen ersten bis zum zweiten Anbindungsbereich zumindest abschnittsweise einen ersten flexiblen schlauchförmigen Hohlkörper oder einen mehrlagigen, keinen Hohlkörper bildenden Materialstreifen, insbesondere Kunststoffmaterialstreifen, aufweist, der zumindest abschnittsweise, insbesondere im Wesentlichen vollständig, von einem zweiten flexiblen schlauchförmigen Hohlkörper umhüllt ist.

Mit der vorangehend geschilderten erfindungsgemäßen Ausführungsform einer Kunststofftragetasche wird neben einem hervorragenden Tragekomfort auch eine verbesserte mechanische Belastbarkeit insbesondere von wiederverwendbaren Kunststofftragetasche sichergestellt. Sowohl die Halteschlaufe als solche wie auch deren Anbindung an den Korpus der Kunststofftragetasche zeichnen sich durch eine besondere Reißfestigkeit aus.

Des Weiteren wurde eine Kunststofftragetasche mit einem geschlossenen oder im Wesentlichen geschlossenen Bodenende und einem gegenüberliegenden Öffnungsende gefunden, umfassend eine Vorderwand und eine Rückwand, jeweils mit einem ersten Seitenrand und einem gegenüberliegenden zweiten Seitenrand sowie einem Öffnungsrand und einem Bodenrand, wobei die Vorderwand und die Rückwand im Bereich ihrer ersten und zweiten Seitenränder und ihrer Bodenränder mindestens abschnittsweise direkt oder über Seitenwände oder Seitenfalten und/oder eine Bodenfalte miteinander verbunden sind, sowie mindestens eine mit der Vorderwand und mindestens eine mit der Rückwand verbundene Halteschlaufe mit jeweils einem ersten und einem zweiten Anbindungsbereich, wobei die Vorder- und Rückwand mehrlagig, insbesondere doppellagig, ausgestaltet sind, umfassend mindestens eine innenliegende Lage, insbesondere eine Innenlage, und eine Außenlage, und dass die Vorder- und/oder Rückwand im Bereich des Öffnungsendes einen, insbesondere sich bis zum Öffnungsende erstreckenden oder dieses umfassenden, Verstärkungsbereich aufweist, enthaltend mindestens einen innen- oder außenseitig an der Vorderwand befestigten und mindestens einen innen- oder außenseitig an der Rückwand befestigten und sich von oder beabstandet von dem ersten Seitenrand in Richtung des oder bis zum zweiten Seitenrand erstreckenden mehrlagigen, insbesondere doppellagigen, Kunststofffolienstreifen, wobei die mit der Vorderwand und die mit der Rückwand verbundene Halteschlaufe jeweils in ihren ersten und zweiten Anbindungsbereichen mit dem mehrlagigen Kunststofffolienstreifen des Verstärkungsbereichs und auch mit der mindestens einen innenliegenden Lage, insbesondere der Innenlage, oder der Außenlage verschweißt und/oder verklebt sind und wobei der mehrlagige Kunststofffolienstreifen des Verstärkungsbereichs der Vorderwand mit der Innen- oder Außenlage, insbesondere von oder beabstandet von dem ersten Seitenrand in Richtung des oder bis zum zweiten Seitenrand, mittels Verschweißung und/oder Verklebung, befestigt ist und wobei der mehrlagige Kunststofffolienstreifen des Verstärkungsbereichs der Rückwand mit der Innen- oder Außenlage, insbesondere von oder beabstandet von dem ersten Seitenrand in Richtung des oder bis zum zweiten Seitenrand, mittels Verschweißung und/oder Verklebung, befestigt ist, wobei sich an die mindestens eine Innenlage, insbesondere die Innenlage, ein Fortsetzungsabschnitt anschließt, wobei dieser Fortsetzungsabschnitt den Kunststofffolienstreifen des Verstärkungsbereichs umfasst oder darstellt, wobei dieser, insbesondere mindestens doppellagige, Fortsetzungsabschnitt entlang einer Erstreckung von oder beabstandet von dem ersten Seitenrand in Richtung des oder bis zum zweiten Seitenrand mit der Außenseite der mindestens einen innenliegenden Lage, insbesondere der Innenlage, sowie gegebenenfalls der Außenlage verschweißt und/oder verklebt ist, insbesondere mit einer kontinuierlichen Längsschweißung, und wobei dieser Fortsetzungsabschnitt sich mindestens abschnittsweise entlang der Außenseite der mindestens einen innenliegenden Lage, insbesondere der Innenlage, erstreckt und an dieser anliegt oder anlegbar ist. Mit der vorangehend geschilderten erfindungsgemäßen Ausführungsform einer Kunststofftragetasche wird eine Verstärkung im oberen Randbereich verfügbar gemacht, die mechanisch starken Belastungen standhält und eine sehr wirkungsvolle Grundlage für die Anbindung von Halteschlaufen liefert. Auch ist die mit einem derartigen Verstärkungsbereich versehene Kunststofftragetasche bequem und unproblematisch zu öffnen.

In einer bevorzugten Ausführungsform der vorangehend spezifizierten Kunststofftragetasche kann dabei vorgesehen sein, dass die mit der Vorderwand über ihre ersten und zweiten Anbindungsbereiche verbundene Halteschlaufe und die mit der Rückwand über ihre ersten und zweiten Anbindungsbereich verbundene Halteschlaufe im Bereich vom jeweiligen ersten bis zum zweiten Anbindungsbereich zumindest abschnittsweise einen ersten flexiblen schlauchförmigen Hohlkörper oder einen mehrlagigen, keinen Hohlkörper bildenden Materialstreifen, insbesondere Kunststoffmaterialstreifen, aufweist, der zumindest abschnittsweise, insbesondere im Wesentlichen vollständig, von einem zweiten flexiblen schlauchförmigen Hohlkörper umhüllt ist. Mit der vorangehend geschilderten erfindungsgemäßen Ausführungsform einer Kunststofftragetasche wird neben einem hervorragenden Tragekomfort auch eine verbesserte mechanische Belastbarkeit insbesondere von wiederverwendbaren Kunststofftragetasche sichergestellt. Sowohl die Halteschlaufe als solche wie auch deren Anbindung an den Korpus der Kunststofftragetasche zeichnen sich durch eine besondere Reißfestigkeit aus. Durch die Kombination der Merkmale, die den Verstärkungsbereich ausbilden, mit den Merkmalen der Halteschlaufe wird eine besonders robuste und belastbare Kunststofftragetasche erhalten.

Auch solche erfindungsgemäßen Kunststofftragetasche sind von besonderem Vorteil, bei denen die mit der Vorderwand und die mit der Rückwand verbundene Halteschlaufe jeweils in ihren ersten und zweiten Anbindungsbereichen mit dem mehrlagigen Kunststofffolienstreifen des Verstärkungsbereichs, und auch mit der mindestens einen innenliegenden Lage, insbesondere der Innenlage, und/oder der Außenlage, thermoplastisch verschweißt sind. Hierbei hat sich regelmäßig die thermoplastische Verschweißung als besonders geeignet erwiesen, um zu einer reißfesten Anbindung an den Korpus der Kunststofftragetasche, insbesondere an den Verstärkungsbereich, zu gelangen. Besonders gute Ergebnisse stellen sich überraschenderweise dadurch ein, dass die, thermoplastisch verschweißten ersten und zweiten Anbindungsbereiche der Halteschlaufen im Verstärkungsbereich keine Überlappung mit weiteren Schweiß- oder Klebezonen aufweisen.

Unter einem Verstärkungsbereich im Sinne der vorliegenden Erfindung soll derjenige Abschnitt im Bereich des Öffnungsendes verstanden werden, in dem der ein- oder mehrlagige, insbesondere doppellagige, Kunststofffolienstreifen vorliegt. In diesem Abschnitt kommt es regelmäßig zu einer Überlappung von Abschnitten der Innen- und der Außenlage von Vorder- bzw. Rückwand mit dem Kunststofffolienstreifen. Auch liegen in diesem überlappenden Abschnitt regelmäßig Verbindungen zwischen diesen einzelnen Lagen bzw. Folien vor.

Für viele Anwendungen der erfindungsgemäßen Kunststofftragetaschen hat es sich als vorteilhaft erwiesen, dass die ersten und zweiten Anbindungsbereiche der mit der Vorderwand verbundenen Halteschlaufe oder die ersten und zweiten Anbindungsbereiche der mit der Rückwand verbundenen Halteschlaufe an der Innenseite von Vorder- bzw. Rückwand im Bereich des mehrlagigen Kunststofffolienstreifens des Verstärkungsbereichs vorliegen. Diese Anbringung ist insbesondere auch deshalb von Vorteil, als der Verstärkungsbereich der erfindungsgemäßen Kunststofftragetasche bevorzugt regelmäßig innenseitig vorliegt, so dass eine direkte Anbindung der Halteschlaufe über ihre Anbindungsbereiche mit diesem Verstärkungsbereichs erfolgt. Auch kann auf diese Weise verhindert werden, dass die oberen Ränder der Tragetasche beim Einführen von Ware Stoßkanten bilden unter durch Berührung mit der Ware nach innen gedrückt werden und dadurch den Zugang zu der Tasche verkleinern bzw. erschweren. Denn die innenseitig angebrachten Halteschlaufen gestatten es, die oberen Ränder der Tragetasche nach außen zu beugen und so einen Kontakt mit der Ware zu verhindern. Es wird so ein relativ großer Öffnungsbereich sichergestellt.

In einer bevorzugten Ausgestaltung der erfindungsgemäßen Kunststofftragetasche kann vorgesehen sein, dass die mit der Vorderwand und/oder die mit der Rückwand, insbesondere innenseitig, verbundene Halteschlaufe jeweils in ihren ersten und zweiten Anbindungsbereichen, direkt oder indirekt, mit dem ein- oder mehrlagigen Kunststofffolienstreifen des Verstärkungsbereichs, und mit der mindestens einen innenliegenden Lage, insbesondere der Innenlage, und der Außenlage, verschweißt, insbesondere thermoplastisch verschweißt, und/oder verklebt ist, wobei in diesen ersten und zweiten Anbindungsbereichen zumindest die Innenseite des zweiten Hohlkörpers der Halteschlaufe, insbesondere die nach innen gewandte Seite des zweiten flexiblen Kunststoffmaterialstreifens, mit der Außenseite des ersten Hohlkörpers oder der zugewandten Seite des ein- oder mehrlagigen, keinen Hohlkörper bildenden Materialstreifens, insbesondere der nach außen gewandten Seite des ersten flexiblen Kunststoffmaterialstreifens, verschweißt, insbesondere thermoplastisch verschweißt, und/oder verklebt vorliegen.

Wenn die ersten und zweiten Anbindungsbereiche der Halteschlaufe unmittelbar an dem Kunststofffolienstreifen des Verstärkungsbereichs anliegen, findet die Verbindung mit der mindestens einen innenliegenden Lage, insbesondere der Innenlage, und der Außenlage regelmäßig indirekt, d.h. über die jeweils anliegende benachbarte Lage statt. In entsprechender Weise kann, wenn die ersten und zweiten Anbindungsbereiche der Halteschlaufe unmittelbar an der Außen- oder der Innenlage anliegen, die Verbindung mit der mindestens einen innenliegenden Lage, insbesondere der Innenlage, bzw. der Außenlage sowie der/den Lagen des Kunststofffolienstreifens des Verstärkungsbereichs jeweils regelmäßig indirekt, d.h. über die jeweils anliegende benachbarte Lage stattfinden. In einigen Ausgestaltungen kann es beispielsweise bei der Verschweißung, insbesondere der thermoplastischen Verschweißung, zu einer Vermengung des aufgeschmolzenen Materials der beteiligten Lagen kommen, so dass nicht mehr eindeutig eine Zuordnung des Materials zu den Lagen möglich ist.

In einer Weiterentwicklung der erfindungsgemäßen Kunststofftragetaschen können diese über eine erste und eine zweite mit der Vorderwand jeweils über erste und zweite Anbindungsbereiche verbundene Halteschlaufe aufweist, wobei die erste Halteschlaufe zwischen den zugehörigen ersten und zweiten Anbindungsbereichen eine größere Erstreckung aufweist als die zweite Halteschlaufe.

Alternativ und vorzugsweise zusätzlich können diese Kunststofftragetaschen eine erste und eine zweite mit der Rückwand jeweils über erste und zweite Anbindungsbereiche verbundene Halteschlaufe aufweist, wobei die erste Halteschlaufe zwischen den zugehörigen ersten und zweiten Anbindungsbereichen eine größere Erstreckung aufweist als die zweite Halteschlaufe. Auf diese Weise kann eine Halteschlaufe beziehungsweise ein Paar an Halteschlaufen zum Tragen mit der Hand und eine weitere Halteschlaufe bzw. ein Paar an Halteschlaufen zum Tragen der Kunststofftragetasche über der Schulter zur Verfügung gestellt werden. Die ersten und zweiten Anbindungsbereiche der ersten und zweiten Halteschlaufen von Vorderwand und/oder Rückwand können dabei deckungsgleich übereinander liegen bzw. in einem Arbeitsgang gefertigt sein oder jeweils getrennt voneinander vorliegen. Bei der letztgenannten Ausführungsform hat es sich als vorteilhaft erwiesen, wenn die ersten und zweiten Anbindungsbereiche der kürzeren Halteschlaufe, das heißt der Halteschlaufe mit der geringeren Erstreckung zwischen diesen Anbindungsbereichen, zwischen den ersten und zweiten Anbindungsbereichen der längeren Halteschlaufe auf der Vorder- bzw. Rückwand vorliegen.

Hinsichtlich der Halteschlaufen der erfindungsgemäßen Kunststofftragetaschen sind solche bevorzugt, bei denen der erste flexible, insbesondere schlauchförmige, Hohlkörper aus einem ersten flexiblen Kunststoffmaterialstreifen mit gegenüberliegenden ersten und zweiten Längsseitenrändern gebildet ist, dessen gegenüberliegende erste und zweite Längsseitenränder in einem Überlappungsbereich miteinander verschweißt, insbesondere thermoplastisch verschweißt, und/oder verklebt sind und/oder, vorzugsweise und, bei denen der zweite flexible, insbesondere schlauchförmige, Hohlkörper aus einem zweiten flexiblen Kunststoffmaterialstreifen mit gegenüberliegenden ersten und zweiten Längsseitenrändern gebildet ist, dessen gegenüberliegende erste und zweite Längsseitenränder in einem zweiten Überlappungsbereich miteinander verschweißt, insbesondere thermoplastisch verschweißt, und/oder verklebt sind.

Die ersten und zweiten flexiblen Kunststoffmaterialstreifen, beispielsweise in Form von Polyolefinfolienstreifen, insbesondere Polyethylenfolienstreifen, können in einer bevorzugten Ausgestaltung, wenn flächig ausgebreitet, eine Rechteckform aufweisen. Die Längsränder dieser Materialstreifen können dann unter Ausbildung der ersten bzw. zweiten insbesondere schlauchförmigen Hohlkörper aufeinander zu bewegt und im Überlappungsbereich miteinander verbunden werden. Hierbei kann der erste Längsseitenrand sowohl ober- wie auch unterhalb des zweiten Längsseitenrandes in einem Überlappungsbereich an diesem zur Anlage gelangen.

Ein besonders hohes Maß an Festigkeit stellt sich hierbei insbesondere auch dadurch ein, dass der erste Kunststoffmaterialstreifen des ersten flexiblen, insbesondere schlauchförmigen, Hohlkörpers und der zweite Kunststoffmaterialstreifen des zweiten flexiblen, insbesondere schlauchförmigen, Hohlkörpers zumindest abschnittsweise, insbesondere entlang der ersten und zweiten Überlappungsbereiche, miteinander verschweißt, insbesondere thermoplastisch verschweißt, und/oder verklebt sind.

Vielfach hat es sich als zweckmäßig erwiesen, die Verschweißung von erstem und zweitem Kunststoffmaterialstreifen im ersten und bzw. zweiten Überlappungsbereich in einem einzigen Verfahrensschritt, d.h. im Wesentlichen gleichzeitig vorzunehmen. Hierdurch entsteht eine sich entlang der insbesondere schlauchförmigen Halteschlaufe erstreckende einheitliche Schweißnaht. Diese Ausführungsform hat den weiteren Vorteil, dass der erste und der zweite flexible Hohlkörper in dem Bereich dieser einheitlichen Schweißnaht, insbesondere thermoplastisch verschweißt, miteinander verbunden vorliegen, wodurch eine nochmals gesteigerte mechanische Festigkeit resultiert. Alternativ können der erste und der zweite insbesondere schlauchförmige Hohlkörper auch bereichsweise oder kontinuierlich entlang ihrer gesamten Länge, insbesondere entlang eines Verbindungsstreifens, miteinander verbunden sein, ohne dass die ersten und zweiten Überlappungsbereiche in diesem Anbindungsbereich selber überlappen.

In einer alternativen Ausgestaltung kann hinsichtlich der Verbindung der ersten und zweiten flexiblen Hohlkörper vorgesehen sein, dass der erste flexible, insbesondere schlauchförmige, Hohlkörper aus einem ersten flexiblen Kunststoffmaterialstreifen mit gegenüberliegenden ersten und zweiten Längsseitenrändern gebildet ist und dass der zweite flexible, insbesondere schlauchförmige, Hohlkörper aus einem zweiten flexiblen Kunststoffmaterialstreifen mit gegenüberliegenden ersten und zweiten Längsseitenrändern gebildet ist, wobei in dem Überlappungsbereich von erstem und zweitem Längsseitenrand des ersten flexiblen Kunststoffmaterialstreifens der erste Längsseitenrand des ersten Kunststoffmaterialstreifens mit dem ersten Längsseitenrand des zweiten Materialstreifens und dieser erste Längsseitenrand des zweiten Kunststoffmaterialstreifens mit dem zweiten Längsseitenrand des ersten Kunststoffmaterialstreifens verschweißt, insbesondere thermoplastisch verschweißt, und/oder verklebt sind und wobei in dem Überlappungsbereich von erstem und zweitem Längsseitenrand des zweiten flexiblen Kunststoffmaterialstreifens der zweite Längsseitenrand des ersten Kunststoffmaterialstreifens mit dem zweiten Längsseitenrand des zweiten Materialstreifens und dieser zweite Längsseitenrand des ersten Kunststoffmaterialstreifens mit dem ersten Längsseitenrand des zweiten Kunststoffmaterialstreifens verschweißt, insbesondere thermoplastisch verschweißt, und/oder verklebt sind.

Für viele Anwendungen hatte sich als zweckmäßig erwiesen, auf solche Kunststofftragetaschen zurückzugreifen, bei denen die erste Halteschlaufe enthaltend die ersten und zweiten flexiblen, insbesondere schlauchförmigen, Hohlkörper und/oder die zweite Halteschlaufe enthaltend die ersten und zweiten flexiblen, insbesondere schlauchförmigen, Hohlkörper unter Ausbildung von zwei gegenüberliegenden Längsfaltkanten flächig gepresst vorliegen, wobei vorzugsweise die Überlappungsbereiche der gegenüberliegenden ersten und zweiten Längsseitenränder von erstem und zweitem flexiblen Kunststoffmaterialstreifen der ersten und zweiten flexiblen Hohlkörper von erster und/oder zweiter Halteschlaufe zwischen den sich gegenüberliegenden Längsfaltkanten sowie insbesondere auf derselben Seite vorliegen. Alternativ kann auch vorgesehen sein, dass die erste Halteschlaufe enthaltend den ein- oder mehrlagigen, keinen Hohlkörper bildenden Materialstreifen und den zweiten flexiblen, insbesondere schlauchförmigen, Hohlkörper und/oder die zweite Halteschlaufe enthaltend den ein- oder mehrlagigen, keinen Hohlkörper bildenden Materialstreifen und den zweiten flexiblen, insbesondere schlauchförmigen, Hohlkörper unter Ausbildung von zwei gegenüberliegenden Längsfaltkanten flächig gepresst vorliegen, wobei vorzugsweise der Überlappungsbereich der gegenüberliegenden ersten und zweiten Längsseitenränder von zweitem flexiblen Kunststoffmaterialstreifen der zweiten flexiblen Hohlkörper von erster und/oder zweiter Halteschlaufe zwischen den sich gegenüberliegenden Längsfaltkanten vorliegen. Mit Hilfe der vorangehenden Ausgestaltungen kann die Vorstufe für die Halteschlaufe in einem flachgepressten Zustand auf einer Rolle gewickelt zwischengelagert und bei Bedarf von dieser abgetrennt werden. Auch vermittelt die flächig gepresste Halteschlaufe ein angenehmes Tragegefühl und erlaubt eine gleichmäßige Verteilung der Tragekräfte.

Eine weitere vorteilhafte Ausgestaltung insbesondere auch der vorangehenden Ausführungsform sieht vor, dass im ersten und/oder zweiten Anbindungsbereich von, insbesondere flächig gepresster, erster und/oder zweite Halteschlaufe diejenige Seite der, insbesondere flächig gepressten, Halteschlaufe die Anbindungsseite ist, die nicht die Überlappungsbereiche der gegenüberliegenden ersten und zweiten Längsseitenränder von erstem und zweitem flexiblen Kunststoffmaterialstreifen der ersten und zweiten flexiblen Hohlkörper aufweist. Es hat sich überraschend gezeigt, dass auf diese Weise eine besonders gute mechanische Stabilität und Reißfestigkeit erzielt wird.

Mit den Halteschlaufen für die erfindungsgemäßen Kunststofftragetaschen lassen sich auch derartige Ausführungsformen erstmalig verwirklichen, bei denen der zweite flexible, insbesondere schlauchförmige, Hohlkörper der Halteschlaufe von Vorder- und/oder Rückwand, insbesondere der den zweiten flexiblen, insbesondere schlauchförmigen, Hohlkörper der Halteschlaufe von Vorder- und/oder Rückwand bildende oder enthaltende zweite flexible Kunststoffmaterialstreifen, auf einem mindestens abschnittweise transparenten Kunststoffmaterial, insbesondere Polyethylen, basiert, das mindestens abschnittsweise innenseitig, insbesondere mittels Konterdruckverfahren, bedruckbar oder bedruckt ist. Indem bei der geschilderten Ausgestaltung der Druck innenseitig an dem zweiten Hohlkörper der Halteschlaufe vorliegt, wird dieser beim Tragen, beispielsweise durch Abrieb, nicht beeinträchtigt. Dies gelingt auch mit einer erfindungsgemäßen Ausführungsform, bei der der erste flexible, insbesondere schlauchförmige, Hohlkörper oder der ein- oder mehrlagige, keinen Hohlkörper bildende Materialstreifen, insbesondere Kunststoffmaterialstreifen, der Halteschlaufe von Vorder- und/oder Rückwand mindestens abschnittsweise außenseitig bedruckbar oder bedruckt ist und dass der zweite flexible, insbesondere schlauchförmige, Hohlkörper der Halteschlaufe auf einem mindestens abschnittweise transparenten Kunststoffmaterial, insbesondere Polyethylen, basiert oder hieraus besteht. Die vorangehenden Ausgestaltungen der erfindungsgemäßen Kunststofftragetasche gestatten auch, die Halteschlaufe bzw. die Halteschlaufen als Informations- oder Werbemittelträger oder für die Anbringung von Designelementen zu verwenden.

Darüber hinaus kann im Sinne der Erfindung vorgesehen sein, dass die Außenlage auf einem mindestens abschnittweise transparenten Kunststoffmaterial, insbesondere Polyethylen, basiert oder hieraus besteht, das mindestens abschnittsweise innenseitig, insbesondere mittels Konterdruckverfahren, bedruckbar oder bedruckt ist. Ferner umfasst die erfindungsgemäße Kunststofftragetasche alternativ oder zusätzlich mindestens eine innenliegende Lage, insbesondere die Innenlage, die mindestens abschnittsweise außenseitig bedruckbar oder bedruckt ist und wobei die Außenlage auf einem mindestens abschnittweise transparenten Kunststoffmaterial, insbesondere Polyethylen, basiert oder hieraus besteht.

Insbesondere zur Erzeugung einer angenehmen Haptik, welche derjenigen von Textilhalteschlaufen nahekommt, hat es sich als vorteilhaft erwiesen, dass der erste flexible, insbesondere schlauchförmige, Hohlkörper, insbesondere der erste flexible Kunststoffmaterialstreifen, oder der ein- oder mehrlagige, keinen Hohlkörper bildende Materialstreifen und/oder der zweite flexible, insbesondere schlauchförmige, Hohlkörper, insbesondere der zweite flexible Kunststoffmaterialstreifen, der Halteschlaufe von Vorder- und/oder Rückwand mindestens abschnittsweise, insbesondere vollflächig, ein Prägemuster aufweisen. Derartige Prägemuster lassen sich zum Beispiel bei Verwendung thermoplastischer Kunststoffe, beispielsweise von Polyolefinen, durch Einwirkung von Wärme und Druck zuverlässig und dauerhaft erzeugen.

Eine ausgeprägte Verstärkung einer erfindungsgemäßen Kunststofftragetasche gelingt auch dadurch, dass sich an die Außenlage ein Fortsetzungsabschnitt anschließt, wobei dieser Fortsetzungsabschnitt den Kunststofffolienstreifen des Verstärkungsbereichs umfasst oder darstellt und wobei der Fortsetzungsabschnitt sich mindestens abschnittsweise entlang der Außenseite der mindestens einen innenliegenden Lage, insbesondere der Innenlage, erstreckt und an dieser anliegt oder anlegbar ist. Dabei ist dieser, insbesondere mindestens doppellagige, Fortsetzungsabschnitt entlang einer Erstreckung von oder beabstandet von dem ersten Seitenrand in Richtung des oder bis zum zweiten Seitenrand mit der Außenseite der mindestens einen innenliegenden Lage, insbesondere der Innenlage, sowie gegebenenfalls der Außenlage verschweißt und/oder verklebt, insbesondere mit einer kontinuierlichen Längsschweißung. Auch hier kann eine besonders pragmatische und gleichzeitig ausgeprägte Verstärkung dadurch erreicht werden, dass der an der Außenseite der mindestens einen innenliegenden Lage, insbesondere der Innenlage, vorliegende Fortsetzungsabschnitt, insbesondere mittels Umschlagens, zumindest bereichsweise mindestens doppellagig ausgestaltet ist. Als besonders zweckmäßig hat sich hierbei auch eine Ausführungsform erwiesen, bei der die Außenlage den Öffnungsrand umfasst oder bildet, wobei die mindestens eine innenliegende Lage, insbesondere die Innenlage, mit ihrem oberen Rand sich bis zum Öffnungsrand oder beabstandet hiervon erstreckt.

Für viele Ausführungsformen der erfindungsgemäßen Kunststofftragetaschen hat es sich als pragmatisch erwiesen, den Öffnungsrand durch eine Faltung am oberen Ende der Außenlage oder im Übergangsbereich von der Außenlage zu dem Fortsetzungsabschnitt zu bilden.

Alternativ gelingt eine ausgeprägte Verstärkung einer erfindungsgemäßen Kunststofftragetasche überraschenderweise auch dadurch, dass sich an die mindestens eine Innenlage, insbesondere die Innenlage, ein Fortsetzungsabschnitt anschließt, wobei dieser Fortsetzungsabschnitt den Kunststofffolienstreifen des Verstärkungsbereichs umfasst oder darstellt, bei dem dieser Fortsetzungsabschnitt sich mindestens abschnittsweise entlang der Außenseite der mindestens einen innenliegenden Lage, insbesondere der Innenlage, erstreckt und an dieser anliegt oder anlegbar ist. Hierbei ist dieser, insbesondere mindestens doppellagige, Fortsetzungsabschnitt entlang einer Erstreckung von oder beabstandet von dem ersten Seitenrand in Richtung des oder bis zum zweiten Seitenrand mit der Außenseite der mindestens einen innenliegenden Lage, insbesondere der Innenlage, sowie gegebenenfalls der Außenlage verschweißt und/oder verklebt, insbesondere mit einer kontinuierlichen Längsschweißung. Der an der Außenseite der mindestens einen innenliegenden Lage, insbesondere der Innenlage, vorliegende Fortsetzungsabschnitt ist, insbesondere mittels Umschlagens, zumindest bereichsweise mindestens doppellagig ausgestaltet.

Auch hinsichtlich der vorangehenden Ausführungsformen hat es sich für viele Ausführungsformen der erfindungsgemäßen Kunststofftragetaschen als pragmatisch erwiesen, den Öffnungsrand durch eine Faltung am oberen Ende der mindestens einen innenliegenden Lage, insbesondere der Innenlage, oder im Übergangsbereich von der mindestens einen innenliegenden Lage, insbesondere der Innenlage, zu dem Fortsetzungsabschnitt auszubilden.

In einer ganz besonders bevorzugten Ausführungsform sind bei erfindungsgemäßen Kunststofftragetaschen die Außenlage und der Fortsetzungsabschnitt der Vorderwand oder der Rückwand einstückig ausgebildet sind. Auch können die mindestens eine innenliegende Lage, insbesondere die Innenlage, und der Fortsetzungsabschnitt der Vorderwand oder der Rückwand einstückig ausgebildet sein. Außerdem können die Außenlagen von Vorder- und Rückwand einstückig ausgebildet sein. Alternativ oder zusätzlich können zudem die Innenlagen von Vorder- Rückwand einstückig ausgebildet sein. Hierdurch gelangt man überraschenderweise zu Kunststofftragetaschen, die sich auch in der Massenfertigung leicht und zuverlässig herstellen lassen. Auch gestattet die vorangehende Ausführungsform einen effizienten Zugang zu einem sortenreinen Recycling.

Der Fortsetzungsabschnitt kann z.B. mittels Umschlagens bzw. Rückfaltens einerseits in der Weise mindestens doppellagig ausgestaltet werden, dass der umgeschlagene Abschnitt nach innen in Richtung der Innenlage im Sinne eines Umbugs umgeschlagen wird. Andererseits kann dies durch Umschlagen bzw. Falten nach außen erfolgen. In entsprechender Weise kann bei dem Fortsetzungsabschnitt der Innenlage verfahren werden.

In einer zweckmäßigen Ausgestaltung der erfindungsgemäßen Kunststofftragetasche kann dabei auch vorgesehen sein, dass diejenige, insbesondere die umgeschlagene bzw. rückgefaltete, Lage des ein- oder mehrlagigen, insbesondere doppellagigen, Kunststofffolienstreifen des Verstärkungsbereichs, insbesondere des Fortsetzungsabschnitts der Außenlage, die an der Innenseite der Innenlage unmittelbar anliegt oder anlegbar ist, in Richtung des Öffnungsendes einen Abschnitt aufweist, der über den oberen Rand der Innenlage hinausgeht, wobei dieser über diesen oberen Rand hinausgehende Abschnitt über diesen oberen Rand der Innenlage umgeschlagen ist und zumindest abschnittsweise an der Außenseite der Innenlage und/oder der Innenseite der Außenlage anliegt oder anlegbar ist. Auf diese Weise gelangt man zu besonders handhabungsfreundlichen wiederverwendbaren Kunststofftragetaschen. So wurde überraschenderweise gefunden, dass sich bei der vorangehend dargestellten Ausführungsform die im noch unbenutzten Zustand aneinander anliegenden oberen Randbereiche von Vorder- und Rückwand besonders leicht voneinander lösen lassen. Auch vermittelt diese Ausführungsform beim Kunden einen sehr hochwertigen Eindruck.

In einer besonders zweckmäßigen Ausführungsform ist der Kunststofffolienstreifen des Verstärkungsbereichs doppellagig ausgeführt, vorzugsweise in einer Weise, dass die umgeschlagene bzw. gefaltete Lage wesentlich kleiner ist als die vorangehende Lage vor dem Umkehrpunkt. Vielfach reicht es aus, wenn der Kunststofffolienstreifen dabei nur in einem Umfang umgeschlagen bzw. rückgefaltet wird, sei es nach innen oder nach außen, dass der dabei erhaltene doppellagige Abschnitt ausreicht, eine Befestigung mit der Innen- bzw. und/oder Außenlage herbeizuführen. Dieser umgeschlagene bzw. gefaltete Endabschnitt kann dabei in der Befestigung/Verbindung vollständig vorliegen, beispielsweise mittels thermoplastischer Verschweißung, oder aber einen Abschnitt aufweisen, der sich geringfügig über diesen Befestigungsbereich hinaus erstreckt. In gleicher Weise kann vorgesehen sein, dass im Umkehrpunkt des gefalteten bzw. umgeschlagenen Abschnitts die Befestigung bzw. Verbindung, beispielsweise thermoplastische Verschweißung, noch nicht vorliegt. Demgemäß kann in einer bevorzugten Ausgestaltung vorgesehen sein, dass die umgeschlagene Lage des doppellagigen Kunststofffolienstreifens des Verstärkungsbereichs, insbesondere des Fortsetzungsabschnitts, der Vorderwand einen umgeschlagenen Endabschnitt darstellt, der sich nicht bis zum oberen Rand von Innen- und/oder Außenlage erstreckt, und dessen Ende in der Befestigung des Kunststofffolienstreifens, insbesondere des Fortsetzungsabschnitts, mit der Außen- und/oder Innenlage vorliegt oder wobei dieser Endabschnitt zumindest abschnittsweise zusammen in der Befestigung des Kunststofffolienstreifens, insbesondere des Fortsetzungsabschnitts, mit der Außen- und/oder Innenlage vorliegt und dessen Ende benachbart zu dieser Befestigung vorliegt, insbesondere nicht mehr als 1 cm oder 2 cm beabstandet hierzu. Hierbei kann alternativ oder zusätzlich vorgesehen sein, dass die umgeschlagene Lage des doppellagigen Kunststofffolienstreifens des Verstärkungsbereichs, insbesondere des Fortsetzungsabschnitts, der Rückwand einen umgeschlagenen Endabschnitt darstellt, der sich nicht bis zum oberen Rand von Innen- und/oder Außenlage erstreckt, und dessen Ende in der Befestigung des Kunststofffolienstreifens, insbesondere des Fortsetzungsabschnitts, mit der Außen- und/oder Innenlage vorliegt oder wobei dieser Endabschnitt zumindest abschnittsweise zusammen in der Befestigung des Kunststofffolienstreifens, insbesondere des Fortsetzungsabschnitts, mit der Außen- und/oder Innenlage vorliegt und dessen Ende benachbart zu dieser Befestigung vorliegt, insbesondere nicht mehr als 1 cm oder 2 cm beabstandet hierzu.

In einer zweckmäßigen Ausgestaltung einer erfindungsgemäßen Kunststofftragetasche kann vorgesehen sein, dass der mehrlagige, insbesondere doppellagige, Kunststofffolienstreifen des Verstärkungsbereichs, insbesondere der mehrlagige, insbesondere doppellagige, Fortsetzungsabschnitt von Vorder- und/oder Rückwand, über seine sämtlichen Lagen mit der Innenseite der mindestens einen innenliegenden Lage, insbesondere der Innenlage, entlang der Erstreckung von oder beabstandet von dem ersten Seitenrand in Richtung des oder bis zum zweiten Seitenrand, insbesondere mit einer kontinuierlichen Längsschweißung, unter Ausbildung eines ersten Verbindungsstreifens verschweißt, insbesondere thermoplastisch verschweißt, und/oder verklebt ist, wobei dieser erste Verbindungsstreifen vorzugsweise näher beabstandet zum unteren Rand des Verstärkungsbereichs als zu dessen oberen Rand vorliegt, insbesondere am oder benachbart zum unteren Rand des Verstärkungsbereichs. Bereits durch Verwendung des ersten Verbindungstreifens, insbesondere wenn in Form einer thermoplastischen Schweißnaht vorliegend, kann ein besonders stabiler Öffnungsrand der erfindungsgemäßen Kunststofftragetasche erhalten werden.

Eine Verbindung bzw. Verschweißung des Kunststofffolienstreifens bzw. des Fortsetzungsabschnitts von Vorder- und/oder Rückwand mit der mindestens einen innenliegenden Lage, insbesondere der Innenlage, beispielsweise der Innenseite der Innenlage, beinhaltet regelmäßig die Verbindung sämtlicher hier aneinander anliegenden Lagen. Das gleiche trifft im Allgemeinen auf die Anbindung des Kunststofffolienstreifens bzw. des Fortsetzungsabschnitts von Vorder- und/oder Rückwand mit der Außenlage zu.

In einer besonders vorteilhaften Ausführungsform ist vorgesehen, dass zusätzlich die Außenlage von Vorder- und/oder Rückwand mit der Außenseite der mindestens einen innenliegenden Lage, insbesondere der Innenlage, entlang der Erstreckung von oder beabstandet von dem ersten Seitenrand in Richtung des oder bis zum zweiten Seitenrand, insbesondere mit einer kontinuierlichen Längsschweißung, unter Ausbildung eines zweiten Verbindungsstreifens verschweißt, insbesondere thermoplastisch verschweißt, und/oder verklebt ist, wobei dieser zweite Verbindungsstreifen vorzugsweise näher beabstandet zum unteren Rand des Verstärkungsbereichs als zu dessen oberen Rand vorliegt, insbesondere am oder benachbart zum unteren Rand des Verstärkungsbereichs. Hierdurch wird ein nochmals verstärkter Öffnungsrand erhalten. Dabei ist ganz besonders bevorzugt, wenn der erste und der zweite Verbindungsstreifen mindestens abschnittsweise, vorzugsweise vollständig, im Wesentlichen überlappend vorliegen.

Ein besonders hohes Maß an Stabilität und Reißfestigkeit wird bei den genannten Ausführungsformen eine erfindungsgemäßen Kunststofftragetasche auch dadurch erreicht, dass die, insbesondere mittels Verschweißung erhaltenen, ersten und zweiten Anbindungsbereiche der mit der Vorderwand und/oder mit der Rückwand verbundenen Halteschlaufen beabstandet von dem ersten und/oder zweiten Verbindungstreifen vorliegen, insbesondere keine Überlappung mit dem ersten und/oder zweiten Verbindungsstreifen aufweisen.

Bei den erfindungsgemäßen Kunststofftragetasche bevorzugt vorgesehen, dass die Außenlage, der mehrlagige, insbesondere doppellagige, Kunststofffolienstreifen des Verstärkungsbereichs, insbesondere der Fortsetzungsabschnitt von Innen- und/oder Außenlage, und die mindestens eine innenliegende Lage, insbesondere die Innenlage, von Vorder- und/oder Rückwand sowie gegebenenfalls die mit der Vorderwand und/oder mit der Rückwand verbundenen Halteschlaufen, insbesondere deren erste und/oder zweite flexible Kunststoffmaterialstreifen und/oder der ein- oder mehrlagige, keinen Hohlkörper bildende Materialstreifen, aus Polyolefinen, insbesondere Polyethylen, gebildet sind oder bestehen. Alternativ zu Polyethylen kann auch auf Polypropylen zurückgegriffen werden. Ebenfalls kommen Copolymere mit Ethylen oder Propylen als Hauptkomponente in Betracht, wobei für die weiteren Comonomeren zum Beispiel auf Propylen bzw. Ethylen und/oder Buten, beispielsweise 1-Buten, oder Butadien zurückgegriffen werden kann. Besonders bevorzugt wird unter den Polyethylenen auf LD-Polyethylen zurückgegriffen.

Vorzugsweise wird für sämtliche Komponenten der erfindungsgemäßen Kunststofftragetasche, zum Beispiel für die Innen- und Außenlage von Vorder- und Rückwand und für die Halteschlaufen von Vorder- und Rückwand sowie, sofern vorhanden, auch für die Seitenwände und die Bodenfläche, durchgängig ein einheitliches Kunststoffmaterial, beispielsweise Polypropylen oder Polyethylen, Polyethylen, und besonders bevorzugt auf LD-Polyethylen, zurückgegriffen. Hierdurch erhält man eine sortenreine Kunststofftragetasche, die sich als solche unproblematisch recyceln lässt.

Des Weiteren sind unter den erfindungsgemäßen Kunststofftragetaschen solche besonders geeignet, bei denen die mindestens eine innenliegende Lage, insbesondere die Innenlage, von Vorder- und/oder Rückwand eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfasst oder darstellt. Hierdurch kann eine textilartige Anmutung in der Handhabung, beispielsweise beim Zusammenfalten, der erfindungsgemäßen Kunststofftragetasche verstärkt werden. Auch kann entsprechender Weise der erste flexible, insbesondere schlauchförmige, Hohlkörper oder der ein- oder mehrlagige, keinen Hohlkörper bildende Materialstreifen eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfassen oder hieraus bestehen.

Ein besonders hohes Maß an Stabilität und Reißfestigkeit wird auch dadurch erreicht, dass man bei den vorangehend genannten Ausführungsformen für eine nicht geschäumte Kunststofffolie, vorzugsweise eine nicht geschäumte Polyolefinfolie, besonders bevorzugt eine nicht geschäumte Polyethylenfolie und insbesondere eine nicht geschäumte LD-Polyethylenfolie einsetzt. Die Kombination aus einer geschäumten Kunststoffinnenlage und eine nicht geschäumten Kunststoffaußenlage führt hier überraschenderweise zu besonders mechanisch belastbaren und dauerhaft stabilen Kunststofftragetaschen. Das gleiche trifft auf solche bevorzugten Ausgestaltungen der Halteschlaufe zu, bei denen der zweite flexible, insbesondere schlauchförmige, Hohlkörper, insbesondere der zweite flexible Kunststoffmaterialstreifen, auf einer nicht geschäumten Kunststofffolie, vorzugsweise einer nicht geschäumten Polyolefinfolie, besonders bevorzugt einer nicht geschäumten Polyethylenfolie und insbesondere eine nicht geschäumte LD-Polyethylenfolie, basiert oder hieraus gebildet ist.

Demgemäß kann in einer sehr zweckmäßigen Ausgestaltung vorgesehen sein, dass die Außenlage, der ein- oder mehrlagige, insbesondere doppellagige, Kunststofffolienstreifen des Verstärkungsbereichs, insbesondere der Fortsetzungsabschnitt von Innen- oder Außenlage, und die mindestens eine innenliegende Lage, insbesondere die Innenlage, von Vorder- und Rückwand sowie gegebenenfalls die mit der Vorderwand und mit der Rückwand verbundenen Halteschlaufen, insbesondere deren erste und/oder zweite flexible Kunststoffmaterialstreifen oder deren ein- oder mehrlagiger, keinen Hohlkörper bildender Materialstreifen, aus Polyethylen, insbesondere LD-Polyethylen, gebildet sind oder bestehen, wobei die mindestens eine innenliegende Lage, insbesondere die Innenlage, von Vorder- und Rückwand eine geschäumte Polyethylenfolie, insbesondere eine geschäumte LD-Polyethylenfolie, darstellt, und wobei die Außenlage von Vorder- und/oder Rückwand, und gegebenenfalls der ein- oder mehrlagige Kunststofffolienstreifen des Verstärkungsbereichs, eine nicht geschäumte Polyethylenfolie, insbesondere eine nicht geschäumte LD-Polyethylenfolie, darstellt. In diesem Zusammenhang sind solche Kunststofftragetaschen besonders bevorzugt, bei denen der erste flexible, insbesondere schlauchförmige, Hohlkörper oder der ein- oder mehrlagige, keinen Hohlkörper bildende Materialstreifen der Halteschlaufe von Vorder- und/oder Rückwand, insbesondere der erste flexible Kunststoffmaterialstreifen, aus geschäumtem Polymermaterial, vorzugsweise geschäumtem Polyethylen, und besonders bevorzugt geschäumtem LD-Polyethylen, gebildet ist oder besteht und wobei vorzugsweise der zweite flexible, insbesondere schlauchförmige, Hohlkörper der Halteschlaufe von Vorder- und/oder Rückwand, insbesondere der zweite flexible Kunststoffmaterialstreifen, aus nicht geschäumtem Polymermaterial, vorzugsweise nicht geschäumtem Polyethylen, und besonders bevorzugt nicht geschäumtem LD-Polyethylen, gebildet ist oder besteht.

Im Sinne der vorliegenden Erfindung liegen die die Außenlage, der ein- oder mehrlagige, insbesondere doppellagige, Kunststofffolienstreifen des Verstärkungsbereichs, insbesondere der Fortsetzungsabschnitt von Innen- oder Außenlage, und/oder die mindestens eine innenliegende Lage, insbesondere die Innenlage, von Vorder- und/oder Rückwand zweckmäßigerweise in Folienform vor.

Die erfindungsgemäßen Kunststofftragetasche, insbesondere die sortenreine erfindungsgemäßen Kunststofftragetasche, kann dabei der ausgestaltet sein, dass die Außenlage, der ein- oder mehrlagige, insbesondere doppellagige, Kunststofffolienstreifen des Verstärkungsbereichs, insbesondere der Fortsetzungsabschnitt von Innen- oder Außenlage, und/oder die mindestens eine innenliegende Lage, insbesondere die Innenlage, von Vorder- und/oder Rückwand sowie gegebenenfalls die mit der Vorderwand und/oder mit der Rückwand verbundenen Halteschlaufen, insbesondere deren erste und/oder zweite flexible Kunststoffmaterialstreifen oder der ein- oder mehrlagige, keinen Hohlkörper bildende Materialstreifen, recyceltes Kunststoffmaterial enthalten oder hieraus bestehen, insbesondere recycelte Polyolefine, beispielsweise Polyethylen.

Weitere Merkmale und Vorteile der Erfindung ergeben sich aus der nachgehenden Beschreibung, in der bevorzugte Ausführungsformen der Erfindung beispielhaft anhand schematischer Zeichnungen erläutert sind. Dabei zeigen
- Figur 1: eine schematische Querschnittsansicht eines Ausschnitts einer Ausführungsform der erfindungsgemäßen Kunststofftragetasche;
- Figur 2: eine schematische Seitenansicht einer erfindungsgemäßen Kunststofftragetasche;
- Figur 3: eine schematische laterale Querschnittsansicht einer ersten Ausführungsform einer Halteschlaufe für eine erfindungsgemäße Kunststofftragetasche;
- Figur 4: eine schematische laterale Querschnittsansicht einer zweiten Ausführungsform einer Halteschlaufe für eine erfindungsgemäße Kunststofftragetasche;
- Figur 5: eine schematische laterale Querschnittsansicht einer dritten Ausführungsform einer Halteschlaufe für eine erfindungsgemäße Kunststofftragetasche und
- Figur 6: eine schematische laterale Querschnittsansicht einer vierten Ausführungsform einer Halteschlaufe für eine erfindungsgemäße Kunststofftragetasche.

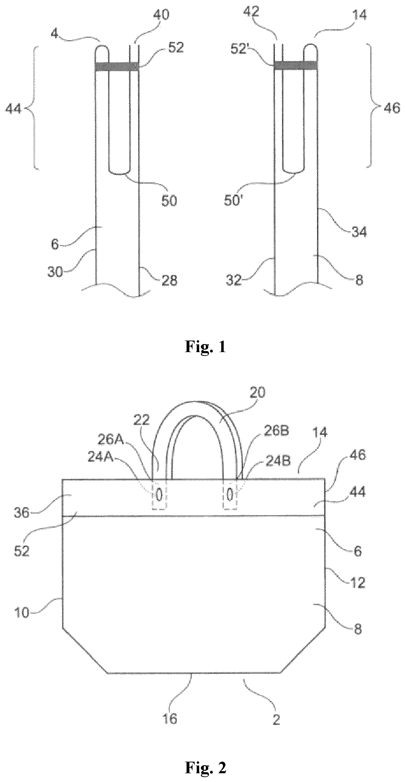

Bei der Ausführungsform einer erfindungsgemäßen Kunststofftragetasche gemäß Figur 1 wird der Verstärkungsbereich 44, 46 durch Umschlagen des Fortsetzungsabschnitts 36, 38 der Außenlage 30, 34 gebildet. Hier befindet sich der umgeschlagene, doppellagige Fortsetzungsabschnitt an bzw. benachbart zu der Außenseite der Innenlage 28, 32. Die Anbindung von Außenlage, Fortsetzungsabschnitt und Innenlage erfolgt in der dargestellten Ausführungsform über eine sich über sämtliche Lagen erstreckende Schweißverbindung 52, 52'.

Figur 2 zeigt eine erfindungsgemäße Kunststofftragetasche 1 in schematischer Seitenansicht. Der Taschenkorpus umfasst ein Bodenende 2 und ein gegenüberliegendes Öffnungsende 4 mit einer Vorderwand 6 und einer Rückwand 8. Vorder- und Rückwand verfügen über einen Öffnungsrand 14 sowie über einen Bodenrand 16, welche im flächig ausgebreiteten Zustand regelmäßig die maximale Ausdehnung des Korpus der Kunststofftragetasche wiedergeben. Die Halteschlaufen 20 und 22 von Vorder- und Rückwand 6 bzw. 8 sind innenseitig in den Verstärkungsbereichen 44, 46 von Vorder- bzw. Rückwand 6 8 angebracht. Demgemäß sind die jeweiligen Anbindungsbereiche 24A, 24B und 26A, 26B in der dargestellten Version gestrichelt gezeichnet. Auf diese Weise kann die erfindungsgemäße Tragetasche besonders unproblematisch befüllt werden. Auch ist bei der dargestellten Ausführungsform einer erfindungsgemäßen Kunststofftragetaschen 1 von besonderem Vorteil, dass die genannten Anbindungsbereiche der Halteschlaufen nicht mit der Verbindungsschweißnaht 52, mit der der Kunststofffolienstreifen bzw. Fortsetzungsabschnitt 36 mit der Vorder- bzw. Rückwand verschweißt ist, überlappen.

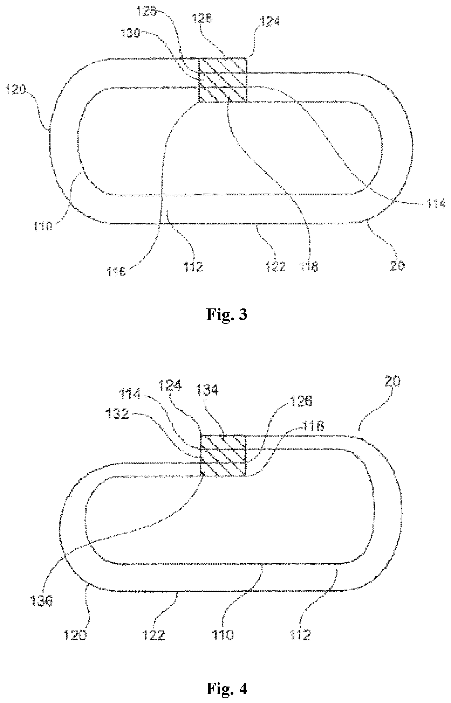

Figur 3 zeigt den Querschnitt durch eine Halteschlaufe 20 für eine erfindungsgemäße Kunststofftragetasche enthaltend einen ersten flexiblen schlauchförmigen Hohlkörper 110 und einen zweiten flexiblen schlauchförmigen Hohlkörper 120, der den ersten Hohlkörper 110 umhüllt. Damit liegt ein erstes schlauchförmiges Gebilde innerhalb eines zweiten schlauchförmigen Gebildes vor. Die ersten und zweiten flexiblen schlauchförmigen Hohlkörper 110, 120 basieren auf ersten und zweiten flexiblen Kunststoffmaterialstreifen 112 und 122, wobei der erste flexible Kunststoffmaterialstreifen 112 gegenüberliegende erste und zweite Längsseitenränder 114 und 116 umfasst, die in der schlauchförmigen Ausbildung des Hohlkörpers 110 einen Überlappungsbereich 118 ausbilden. In gleicher Weise basiert der zweite flexible schlauchförmige Hohlkörper 120 auf einem flexiblen Materialstreifen 122, der einander gegenüberliegende erste und zweite Längsseitenränder 124 und 126 aufweist, die in der schlauchförmigen Ausgestaltung einen Überlappungsbereich 128 ausbilden. Die in Figur 3 dargestellte erfindungsgemäße Ausführungsform einer Halteschlaufe 20 für eine erfindungsgemäße Kunststofftragetasche ist derart ausgestaltet, dass die ersten und zweiten Längsseitenränder von erster und zweiter Kunststoffmaterialbahn 112, 122 in den Überlappungsbereichen 118 und 128 jeweils miteinander verschweißt sind. Darüber hinaus bilden die Überlappungsbereiche 118 und 128 ebenfalls einen Überlappungsbereich 130 aus. In diesem liegen die Innenseite des zweiten Längsseitenrandes 126 des äußeren schlauchförmigen Hohlkörpers 120 bzw. des Kunststoffmaterialstreifens 122 und die Außenseite des ersten Längsseitenrandes 114 des innenliegenden schlauchförmigen Hohlkörpers 110 bzw. des ersten flexiblen Kunststoffmaterialstreifens 112 aneinander an bzw. sind einander zugewandt und in der dargestellten Ausführungsform miteinander verbunden, insbesondere verschweißt. Auf diese Weise wird eine sehr stabile und mechanisch belastbare Halteschlaufe für eine Kunststofftragetasche erhalten. Die flexiblen Kunststoffmaterialstreifen 112 und 122 sind dabei vorzugsweise aus demselben Kunststoffmaterial, insbesondere Polyethylen und besonders bevorzugt LD-Polyethylen gefertigt.

Figur 4 zeigt eine weitere Ausführungsform einer Halteschlaufe 20 für eine erfindungsgemäße Kunststofftragetasche. Diese unterscheidet sich von der Ausführungsform gemäß Figur 3 durch die Ausbildung der jeweiligen Überlappungsbereiche, in denen die flexiblen ersten und zweiten Kunststoffmaterialstreifen 112 und 122 miteinander verbunden, insbesondere verschweißt vorliegen. So liegen in der dargestellten Ausführungsform der erste Längsseitenrand 114 des ersten flexiblen Kunststoffmaterialstreifens 112 und der zweite Längsseitenrand 126 des zweiten flexiblen Kunststoffmaterialstreifens 122 in einem Überlappungsbereich 132 aneinander an bzw. sind einander zugewandt und sind in diesem Bereich miteinander verbunden, insbesondere verschweißt. Ferner liegt innenseitig zu dem zweiten Längsseitenrand 126 der erste Längsseitenrand 116 des ersten flexiblen Kunststoffmaterialstreifens 112 vor, welche in einem Überlappungsbereich 136 miteinander verbunden, insbesondere verschweißt sind. Dieser Überlappungsbereich 136 ist vorzugsweise im Wesentlichen deckungsgleich mit dem vorangehend geschilderten Überlappungsbereich 132. Entsprechend ist die Außenseite des ersten Längsseitenrandes 114 des ersten Kunststoffmaterialstreifens 112 der Innenseite des ersten Längsseitenrandes 124 des zweiten flexiblen Kunststoffmaterialstreifens 122 zugewandt und in einem Überlappungsbereich 134 miteinander verbunden, insbesondere verschweißt. Vorzugsweise befindet sich der Überlappungsbereich 134 im Wesentlichen in Deckung mit den Überlappungsbereichen 132 und 136.

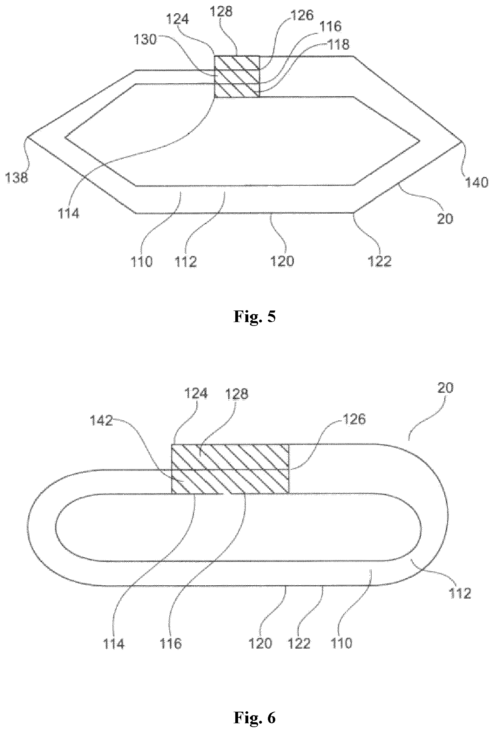

Figur 5 zeigt eine weitere Ausgestaltung einer Halteschlaufe 20 für eine erfindungsgemäße Kunststofftragetasche. Diese Ausführungsform unterscheidet sich von der Halteschlaufe gemäß Figur 3 im Wesentlichen dadurch, dass nicht der erste Längsseitenrand des ersten flexiblen Kunststoffmaterialstreifens 112, sondern der zweite Längsseitenrand 116 an den zweiten Längsseitenrand 126 des zweiten Kunststoffmaterialstreifens 122 im Überlappungsbereich 130 anliegt bzw. diesem zugewandt ist. Demgemäß sind die ersten Längsseitenränder 114 und 124 in der Ausführungsform gemäß Figur 5 weiter voneinander beanstandet als in der Ausführungsform gemäß Figur 3. Ferner ist die Halteschlaufe 100 gemäß Figur 5 flächig gepresst worden, so dass zwei sich gegenüberliegende Längsfaltkanten 138 und 140 vorliegen.

Die flexiblen Kunststoffmaterialstreifen, insbesondere der des zweiten schlauchförmigen Hohlkörpers, das heißt der den außenliegenden Hohlkörper bildende Kunststoffmaterialstreifen kann in einer zweckmäßigen Ausgestaltung mit einem Prägemuster versehen sein (nicht abgebildet). Hierdurch entstehen ein größerer Tragekomfort und eine Haptik, die der einer Textilhalteschlaufe entspricht bzw. nahekommt.

Figur 6 entnimmt man eine weitere Ausführungsform einer Halteschlaufe 20 für eine erfindungsgemäße Kunststofftragetasche. Hierbei bilden die ersten und zweiten Längsseitenränder 124, 126 des zweiten Kunststoffmaterialstreifens 122 einen Überlappungsbereich 128 aus, in dem sie miteinander verbunden, insbesondere verschweißt, sind. In diesem Überlappungsbereich liegen an der Innenseite des zweiten Längsseitenrandes 126 die ersten und zweiten Längsseitenränder 114, 116 des ersten flexiblen Kunststoffmaterialstreifens 112 an. Diese sind im Unterschied zu den vorangehend dargestellten Ausführungsformen einer Halteschlaufe für eine erfindungsgemäße Kunststofftragetasche nicht überlappend angeordnet und können in einer bevorzugten Ausführungsform aneinander anstoßen. In dem Überlappungsbereich 142 sind diese ersten und zweiten Längsseitenränder 114, 116 mit dem zweiten Längsseitenrand 126 der den zweiten Hohlkörper 120 bildenden Kunststoffmaterialstreifen 122 verbunden, insbesondere verschweißt. Selbstverständlich ist es ebenfalls möglich, dass nur der zweite Längsseitenrand 116 des ersten Kunststoffmaterialstreifens 112 in dem Überlappungsbereich 142 vorliegt und mit dem zweiten Längsseitenrand 126 verbunden, verschweißt ist, während der erste Längsseitenrand 114 des ersten Kunststoffmaterialstreifens 112 benachbart hierzu, d.h. ohne Überlappung mit dem ersten Längsseitenrand 124 des zweiten Kunststoffmaterialstreifens 122 mit der Innenseite des zweiten Kunststoffmaterialstreifens 122 verbunden, insbesondere verschweißt, vorliegt (nicht abgebildet).

Die vorangehend geschilderten Ausführungsformen einer Halteschlaufe für eine erfindungsgemäße Kunststofftragetasche eignen sich insbesondere auch für die Zurverfügungstellung bedruckter Halteschlaufen. So kann durch Bedrucken der Innenseite des zweiten Kunststoffmaterialstreifens, welcher den außenliegenden schlauchförmigen Hohlkörper bildet, eine mit Motiven, Informationen oder in sonstiger Weise farbig ausgestalteter Halteschlaufe erhalten werden, die gegenüber mechanischer Beanspruchung sehr widerstandsfähig ist. Hierfür greift man bevorzugt auf transparente zweite Kunststoffmaterialstreifen zurück, welche innenseitig bedruckt werden, vorzugweise mittels Konterdruckverfahrens.

Die in der vorstehenden Beschreibung, in den Ansprüchen sowie in den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Kunststofftragetasche (1) mit einem geschlossenen oder im Wesentlichen geschlossenen Bodenende (2) und einem gegenüberliegenden Öffnungsende (4), umfassend
eine Vorderwand (6) und eine Rückwand (8), jeweils mit einem ersten Seitenrand (10) und einem gegenüberliegenden zweiten Seitenrand (12) sowie einem Öffnungsrand (14) und einem Bodenrand (16),
wobei die Vorderwand (6) und die Rückwand (8) im Bereich ihrer ersten und zweiten Seitenränder (10,12) und ihrer Bodenränder (16) mindestens abschnittsweise direkt oder über Seitenwände oder Seitenfalten und/oder eine Bodenfalte miteinander verbunden sind, sowie
mindestens eine mit der Vorderwand (6) und mindestens eine mit der Rückwand (8) verbundene Halteschlaufe (20, 22) mit jeweils einem ersten und einem zweiten Anbindungsbereich (24A, 24B; 26A, 26B),
wobei die Vorder- und Rückwand (6, 8) mehrlagig ausgestaltet sind, umfassend mindestens eine innenliegende Lage und eine Außenlage (28, 30; 32, 34),
wobei die Vorder- und die Rückwand (6, 8) im Bereich des Öffnungsendes (4) einen Verstärkungsbereich (44, 46) aufweisen, enthaltend
mindestens einen innen- oder außenseitig an der Vorderwand (6) befestigten und mindestens einen innen- oder außenseitig an der Rückwand (8) befestigten und sich von oder beabstandet von dem ersten Seitenrand (10) in Richtung des oder bis zum zweiten Seitenrand (12) erstreckenden mehrlagigen Kunststofffolienstreifen, wobei die mit der Vorderwand (6) und die mit der Rückwand (8) verbundene Halteschlaufe jeweils in ihren ersten und zweiten Anbindungsbereichen mit dem mehrlagigen Kunststofffolienstreifen des Verstärkungsbereichs und auch mit der mindestens einen innenliegenden Lage oder der Außenlage verschweißt und/oder verklebt sind,
wobei der mehrlagige Kunststofffolienstreifen des Verstärkungsbereichs der Vorderwand mit der Innen- oder Außenlage mittels Verschweißung und/oder Verklebung befestigt ist und
wobei der mehrlagige Kunststofffolienstreifen des Verstärkungsbereichs der Rückwand mit der Innen- oder Außenlage mittels Verschweißung und/oder Verklebung befestigt ist,
**dadurch gekennzeichnet, dass**
die mit der Vorderwand (6) über ihre ersten und zweiten Anbindungsbereiche (24A, 24B) verbundene Halteschlaufe (20) und die mit der Rückwand (8) über ihre ersten und zweiten Anbindungsbereich (26A, 26B) verbundene Halteschlaufe (22) im Bereich vom jeweiligen ersten bis zum zweiten Anbindungsbereich zumindest abschnittsweise einen ersten flexiblen schlauchförmigen Hohlkörper oder einen ein-oder mehrlagigen, keinen Hohlkörper bildenden Materialstreifen, insbesondere Kunststoffmaterialstreifen, aufweist, der abschnittsweise oder im Wesentlichen vollständig von einem zweiten flexiblen schlauchförmigem Hohlkörper umhüllt ist.

2. Kunststofftragetasche (1) mit einem geschlossenen oder im Wesentlichen geschlossenen Bodenende (2) und einem gegenüberliegenden Öffnungsende (4), umfassend
eine Vorderwand (6) und eine Rückwand (8), jeweils mit einem ersten Seitenrand (10) und einem gegenüberliegenden zweiten Seitenrand (12) sowie einem Öffnungsrand (14) und einem Bodenrand (16),
wobei die Vorderwand (6) und die Rückwand (8) im Bereich ihrer ersten und zweiten Seitenränder (10,12) und ihrer Bodenränder (16) mindestens abschnittsweise direkt oder über Seitenwände oder Seitenfalten und/oder eine Bodenfalte miteinander verbunden sind, sowie
mindestens eine mit der Vorderwand (6) und mindestens eine mit der Rückwand (8) verbundene Halteschlaufe (20, 22) mit jeweils einem ersten und einem zweiten Anbindungsbereich (24A, 24B; 26A, 26B),
wobei die Vorder- und Rückwand (6, 8) mehrlagig ausgestaltet sind, umfassend mindestens eine innenliegende Lage und eine Außenlage (28, 30; 32, 34),
wobei die Vorder- und die Rückwand (6, 8) im Bereich des Öffnungsendes (4) einen Verstärkungsbereich (44, 46) aufweisen, enthaltend
mindestens einen innen- oder außenseitig an der Vorderwand (6) befestigten und mindestens einen innen- oder außenseitig an der Rückwand (8) befestigten und sich von oder beabstandet von dem ersten Seitenrand (10) in Richtung des oder bis zum zweiten Seitenrand (12) erstreckenden mehrlagigen Kunststofffolienstreifen, wobei die mit der Vorderwand (6) und die mit der Rückwand (8) verbundene Halteschlaufe jeweils in ihren ersten und zweiten Anbindungsbereichen mit dem mehrlagigen Kunststofffolienstreifen des Verstärkungsbereichs und auch mit der mindestens einen innenliegenden Lage oder der Außenlage verschweißt und/oder verklebt sind,
wobei der mehrlagige Kunststofffolienstreifen des Verstärkungsbereichs der Vorderwand mit der Innen- oder Außenlage mittels Verschweißung und/oder Verklebung befestigt ist,
wobei der mehrlagige Kunststofffolienstreifen des Verstärkungsbereichs der Rückwand mit der Innen- oder Außenlage mittels Verschweißung und/oder Verklebung befestigt ist,
**dadurch gekennzeichnet, dass**
sich an die Außenlage (30, 34) ein Fortsetzungsabschnitt (36) anschließt, wobei der Fortsetzungsabschnitt den Kunststofffolienstreifen des Verstärkungsbereichs umfasst oder darstellt,
wobei dieser, insbesondere mindestens doppellagige, Fortsetzungsabschnitt (36, 38) entlang einer Erstreckung von oder beabstandet von dem ersten Seitenrand (10) in Richtung des oder bis zum zweiten Seitenrand (12) mit der Außenseite der mindestens einen innenliegenden Lage (28, 32), insbesondere der Innenlage, sowie gegebenenfalls der Außenlage verschweißt und/oder verklebt ist, insbesondere mit einer kontinuierlichen Längsschweißung,
wobei der Fortsetzungsabschnitt (36) sich mindestens abschnittsweise entlang der Außenseite der mindestens einen innenliegenden Lage (28, 32) erstreckt und an dieser anliegt oder anlegbar ist.

3. Kunststofftragetasche (1) mit einem geschlossenen oder im Wesentlichen geschlossenen Bodenende (2) und einem gegenüberliegenden Öffnungsende (4), umfassend
eine Vorderwand (6) und eine Rückwand (8), jeweils mit einem ersten Seitenrand (10) und einem gegenüberliegenden zweiten Seitenrand (12) sowie einem Öffnungsrand (14) und einem Bodenrand (16),
wobei die Vorderwand (6) und die Rückwand (8) im Bereich ihrer ersten und zweiten Seitenränder (10,12) und ihrer Bodenränder (16) mindestens abschnittsweise direkt oder über Seitenwände oder Seitenfalten und/oder eine Bodenfalte miteinander verbunden sind, sowie
mindestens eine mit der Vorderwand (6) und mindestens eine mit der Rückwand (8) verbundene Halteschlaufe (20, 22) mit jeweils einem ersten und einem zweiten Anbindungsbereich (24A, 24B; 26A, 26B),
wobei die Vorder- und Rückwand (6, 8) mehrlagig ausgestaltet sind, umfassend mindestens eine innenliegende Lage und eine Außenlage (28, 30; 32, 34),
wobei die Vorder- und die Rückwand (6, 8) im Bereich des Öffnungsendes (4) einen Verstärkungsbereich (44, 46) aufweisen, enthaltend
mindestens einen innen- oder außenseitig an der Vorderwand (6) befestigten und mindestens einen innen- oder außenseitig an der Rückwand (8) befestigten und sich von oder beabstandet von dem ersten Seitenrand (10) in Richtung des oder bis zum zweiten Seitenrand (12) erstreckenden mehrlagigen Kunststofffolienstreifen, wobei die mit der Vorderwand (6) und die mit der Rückwand (8) verbundene Halteschlaufe jeweils in ihren ersten und zweiten Anbindungsbereichen mit dem mehrlagigen Kunststofffolienstreifen des Verstärkungsbereichs und auch mit der mindestens einen innenliegenden Lage oder der Außenlage verschweißt und/oder verklebt sind,
wobei der mehrlagige Kunststofffolienstreifen des Verstärkungsbereichs der Vorderwand mit der Innen- oder Außenlage mittels Verschweißung und/oder Verklebung befestigt ist und
wobei der mehrlagige Kunststofffolienstreifen des Verstärkungsbereichs der Rückwand mit der Innen- oder Außenlage mittels Verschweißung und/oder Verklebung befestigt ist,
**dadurch gekennzeichnet, dass**
sich an die mindestens eine Innenlage ein Fortsetzungsabschnitt (36) anschließt, wobei dieser Fortsetzungsabschnitt den Kunststofffolienstreifen des Verstärkungsbereichs umfasst oder darstellt,
wobei dieser, insbesondere mindestens doppellagige, Fortsetzungsabschnitt entlang einer Erstreckung von oder beabstandet von dem ersten Seitenrand (10) in Richtung des oder bis zum zweiten Seitenrand (12) mit der Außenseite der mindestens einen innenliegenden Lage (28, 32), insbesondere der Innenlage, sowie gegebenenfalls der Außenlage verschweißt und/oder verklebt ist, insbesondere mit einer kontinuierlichen Längsschweißung,
wobei dieser Fortsetzungsabschnitt (36) sich mindestens abschnittsweise entlang der Außenseite der mindestens einen innenliegenden Lage (28, 32) erstreckt und an dieser anliegt oder anlegbar ist.

4. Kunststofftragetasche (1) nach Anspruch 2 oder 3, **dadurch gekennzeichnet, dass** die mit der Vorderwand (6) über ihre ersten und zweiten Anbindungsbereiche (24A, 24B) verbundene Halteschlaufe (20) und die mit der Rückwand (8) über ihre ersten und zweiten Anbindungsbereich (26A, 26B) verbundene Halteschlaufe (22) im Bereich vom jeweiligen ersten bis zum zweiten Anbindungsbereich zumindest abschnittsweise einen ersten flexiblen schlauchförmigen Hohlkörper oder einen ein-oder mehrlagigen, keinen Hohlkörper bildenden Materialstreifen, insbesondere Kunststoffmaterialstreifen, aufweist, der abschnittsweise oder im Wesentlichen vollständig von einem zweiten flexiblen schlauchförmigem Hohlkörper umhüllt ist.

5. Kunststofftragetasche (1) nach Anspruch 1, 2, 3 oder 4, **dadurch gekennzeichnet, dass**
die mit der Vorderwand (6) und die mit der Rückwand (8) verbundene Halteschlaufe jeweils in ihren ersten und zweiten Anbindungsbereichen mit dem mehrlagigen Kunststofffolienstreifen des Verstärkungsbereichs und auch mit der mindestens einen innenliegenden Lage oder der Außenlage thermoplastisch verschweißt sind oder dass
der mehrlagige Kunststofffolienstreifen des Verstärkungsbereichs der Vorderwand mit der Innen- oder Außenlage von oder beabstandet von dem ersten Seitenrand in Richtung des oder bis zum zweiten Seitenrand mittels thermoplastischer Verschweißung befestigt ist oder dass
der mehrlagige Kunststofffolienstreifen des Verstärkungsbereichs der Rückwand mit der Innen- oder Außenlage von oder beabstandet von dem ersten Seitenrand in Richtung des oder bis zum zweiten Seitenrand mittels thermoplastischer Verschweißung befestigt ist.

6. Kunststofftragetasche (1) nach einem der vorangehenden Ansprüche, **dadurch**
**gekennzeichnet, dass**
die ersten und zweiten Anbindungsbereiche der mit der Vorderwand (6) verbundenen Halteschlaufe oder die ersten und zweiten Anbindungsbereiche der mit der Rückwand (8) verbundenen Halteschlaufe an der Innenseite von Vorder- bzw. Rückwand (8) im Bereich des mehrlagigen Kunststofffolienstreifens des Verstärkungsbereichs vorliegen.

7. Kunststofftragetasche (1) nach einem der vorangehenden Ansprüche, **dadurch**
**gekennzeichnet, dass**
die Vorder- oder die Rückwand (6, 8) doppellagig ausgestaltet ist oder dass der mehrlagige Kunststofffolienstreifen von Vorder- oder Rückwand doppellagig ausgestaltet ist.

8. Kunststofftragetasche (1) nach einem der Ansprüche 1 bis 7, **dadurch**
**gekennzeichnet, dass**
die mindestens eine innenliegende Lage die Innenlage darstellt.

9. Kunststofftragetasche (1) nach einem der vorangehenden Ansprüche, **dadurch**
**gekennzeichnet, dass**
der Verstärkungsbereich von Vorder- oder Rückwand sich bis zum Öffnungsende erstreckt oder dieses umfasst.

10. Kunststofftragetasche (1) nach einem der vorangehenden Ansprüche, **dadurch**
**gekennzeichnet, dass**
die Außenlage auf einem mindestens abschnittweise transparenten Kunststoffmaterial, insbesondere Polyethylen, basiert oder hieraus besteht, das mindestens abschnittsweise innenseitig bedruckbar oder bedruckt ist oder dass die mindestens eine innenliegende Lage mindestens abschnittsweise außenseitig bedruckbar oder bedruckt ist und dass die Außenlage auf einem mindestens abschnittweise transparenten Kunststoffmaterial, insbesondere Polyethylen, basiert oder hieraus besteht.

11. Kunststofftragetasche (1) nach Anspruch 2 oder nach einem der Ansprüche 4 bis 10, sofern und soweit direkt oder indirekt auf Patentanspruch 2 rückbezogen,
**dadurch gekennzeichnet, dass**
der an der Außenseite der mindestens einen innenliegenden Lage (28, 32) vorliegende Fortsetzungsabschnitt (36), insbesondere mittels Umschlagens, zumindest bereichsweise mindestens doppellagig ausgestaltet ist, und
wobei die Außenlage (30, 34) den Öffnungsrand (14) umfasst oder bildet, wobei die mindestens eine innenliegende Lage (28, 32) mit ihrem oberen Rand (40, 42) sich bis zum Öffnungsrand (14) oder beabstandet hiervon erstreckt.

12. Kunststofftragetasche (1) nach Anspruch 3 oder nach einem der Ansprüche 4 bis 10, sofern und soweit direkt oder indirekt auf Patentanspruch 3 rückbezogen,
**dadurch gekennzeichnet, dass**
der an der Außenseite der mindestens einen innenliegenden Lage (28, 32) vorliegende Fortsetzungsabschnitt (36), insbesondere mittels Umschlagens, zumindest bereichsweise mindestens doppellagig ausgestaltet ist

13. Kunststofftragetasche (1) nach Anspruch 2 oder nach einem der Ansprüche 4 bis 10, sofern und soweit direkt oder indirekt auf Patentanspruch 2 rückbezogen, oder nach Anspruch 3 oder nach einem der Ansprüche 4 bis 10, sofern und soweit direkt oder indirekt auf Patentanspruch 3 rückbezogen, **dadurch gekennzeichnet, dass** die Außenlage und der Fortsetzungsabschnitt der Vorderwand (6) oder der Rückwand (8) einstückig ausgebildet sind oder dass die mindestens eine innenliegende Lage und der Fortsetzungsabschnitt der Vorderwand (6) oder der Rückwand (8) einstückig ausgebildet sind oder dass die Außenlagen von Vorderund Rückwand (8) einstückig ausgebildet sind oder dass die Innenlagen von Vorder- und Rückwand (8) einstückig ausgebildet sind.

14. Kunststofftragetasche (1) nach einem der vorangehenden Ansprüche, **dadurch**
**gekennzeichnet, dass**
der mehrlagige Kunststofffolienstreifen des Verstärkungsbereichs über seine sämtlichen Lagen mit der Innenseite der mindestens einen innenliegenden Lage entlang der Erstreckung von oder beabstandet von dem ersten Seitenrand in Richtung des oder bis zum zweiten Seitenrand, insbesondere mit einer kontinuierlichen Längsschweißung, unter Ausbildung eines ersten Verbindungsstreifens verschweißt und/oder verklebt ist, wobei dieser erste Verbindungsstreifen vorzugsweise näher beabstandet zum unteren Rand des Verstärkungsbereichs als zu dessen oberen Rand vorliegt, insbesondere am oder benachbart zum unteren Rand des Verstärkungsbereichs.

15. Kunststofftragetasche (1) nach einem der vorangehenden Ansprüche, **dadurch**
**gekennzeichnet, dass**
die Außenlage von Vorder- und/oder Rückwand (6, 8) mit der Außenseite der mindestens einen innenliegenden Lage entlang der Erstreckung von oder beabstandet von dem ersten Seitenrand in Richtung des oder bis zum zweiten Seitenrand, insbesondere mit einer kontinuierlichen Längsschweißung, unter Ausbildung eines zweiten Verbindungsstreifens verschweißt, insbesondere thermoplastisch verschweißt, und/oder verklebt ist, wobei dieser zweite Verbindungsstreifen vorzugsweise näher beabstandet zum unteren Rand des Verstärkungsbereichs als zu dessen oberen Rand vorliegt, insbesondere am oder benachbart zum unteren Rand des Verstärkungsbereichs.

16. Kunststofftragetasche (1) nach einem der vorangehenden Ansprüche, **dadurch**
**gekennzeichnet, dass**
die, insbesondere mittels Verschweißung erhaltenen, ersten und zweiten Anbindungsbereiche der mit der Vorderwand (6) oder mit der Rückwand (8) verbundenen Halteschlaufen beabstandet von der Verbindung des mehrlagigen Kunststofffolienstreifens des Verstärkungsbereichs der Vorderwand mit der Innenoder Außenlage oder beabstandet von der Verbindung des mehrlagigen Kunststofffolienstreifens des Verstärkungsbereichs der Rückwand mit der Innenoder Außenlage, insbesondere beabstandet von dem ersten und/oder zweiten Verbindungstreifen vorliegen, insbesondere keine Überlappung mit dem ersten und gegebenenfalls zweiten Verbindungsstreifen aufweisen.

17. Kunststofftragetasche (1) nach einem der vorangehenden Ansprüche, **dadurch**
**gekennzeichnet, dass**
die Außenlage, der mehrlagige Kunststofffolienstreifen des Verstärkungsbereichs und die mindestens eine innenliegende Lage von Vorder- oder Rückwand (6, 8) sowie gegebenenfalls die mit der Vorderwand (6) oder mit der Rückwand (8) verbundenen Halteschlaufen, insbesondere deren erste und/oder zweite flexible Kunststoffmaterialstreifen oder der ein- oder mehrlagige, keinen Hohlkörper bildende Materialstreifen, aus Polyolefinen, insbesondere Polyethylen, gebildet sind oder bestehen.

18. Kunststofftragetasche (1) nach Anspruch 17, **dadurch gekennzeichnet, dass**
die mindestens eine innenliegende Lage von Vorder- und/oder Rückwand (6, 8) eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfasst oder darstellt, oder dass
der erste flexible, insbesondere schlauchförmige, Hohlkörper oder der ein- oder mehrlagige, keinen Hohlkörper bildende Materialstreifen eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfasst oder darstellt,
und wobei vorzugsweise die Außenlage von Vorder- und Rückwand (6, 8) eine nicht geschäumte Kunststofffolie, vorzugsweise eine nicht geschäumte Polyolefinfolie, besonders bevorzugt eine nicht geschäumte Polyethylenfolie und insbesondere eine nicht geschäumte LD-Polyethylenfolie, darstellt oder wobei vorzugsweise der zweite flexible, insbesondere schlauchförmige, Hohlkörper, insbesondere der zweite flexible Kunststoffmaterialstreifen, auf einer nicht geschäumten Kunststofffolie, vorzugsweise einer nicht geschäumten Polyolefinfolie, besonders bevorzugt einer nicht geschäumten Polyethylenfolie und insbesondere eine nicht geschäumte LD-Polyethylenfolie, basiert oder hieraus gebildet ist.

19. Kunststofftragetasche (1) nach einem der vorangehenden Ansprüche, **dadurch**
**gekennzeichnet, dass**
die Außenlage, der mehrlagige, Kunststofffolienstreifen des Verstärkungsbereichs und die mindestens eine innenliegende Lage, insbesondere die Innenlage, von Vorder- und Rückwand (8) sowie gegebenenfalls die mit der Vorderwand (6) und mit der Rückwand (8) verbundenen Halteschlaufen, insbesondere deren erste und/oder zweite flexible Kunststoffmaterialstreifen oder deren ein- oder mehrlagiger, keinen Hohlkörper bildender Materialstreifen, aus Polyethylen, insbesondere LD-Polyethylen, gebildet sind oder bestehen, wobei die mindestens eine innenliegende Lage von Vorder- und Rückwand (8) eine geschäumte Polyethylenfolie, insbesondere eine geschäumte LD-Polyethylenfolie, darstellt, und wobei die Außenlage von Vorder- und Rückwand (6, 8), und gegebenenfalls der mehrlagige Kunststofffolienstreifen des Verstärkungsbereichs, eine nicht geschäumte Polyethylenfolie, insbesondere eine nicht geschäumte LD-Polyethylenfolie, darstellt.

## Claims

1. A plastic carrier bag (1) having a closed or substantially closed bottom end (2) and an opposite opening end (4), comprising
a front panel (6) and a rear panel (8), each having a first side edge (10) and an opposite second side edge (12) as well as an opening edge (14) and a bottom edge (16),
wherein the front panel (6) and the rear panel (8) are joined to one another in the area of their first and second side edges (10,12) and their bottom edges (16) at least in sections directly or via side walls or side folds and/or a bottom fold, as well as at least one holding strap (20) joined to the front panel (6) and at least one holding strap (22) joined to the rear panel (8) with a first and a second connecting area (24A, 24B; 26A, 26B) respectively,
**characterized in that** the front and the rear panel (6, 8) are designed to be multi-layered, comprising at least an internal layer and an outer layer (28, 30; 32, 34), the front and the rear panel (6, 8) in the area of the opening end (4) have a reinforcing area (44, 46), containing at least one multi-layered plastic film strip secured on the inside or outside to the front panel (6) and at least one multi-layered plastic film strip secured on the inside or outside to the rear panel (8) and extending from or at a distance from the first side edge (10) in the direction of or up to the second side edge (12),
wherein the holding strap joined to the front panel (6) and the holding strap joined to the rear panel (8) are heat-sealed and/or adhered respectively in their first and second connecting areas to the multi-layered plastic film strip of the reinforcing area and also to the at least one internal layer or the outer layer,
the multi-layered plastic film strip of the reinforcing area of the front panel is secured by means of heat sealing and/or adhesion to the inner or outer layer, and the multi-layered plastic film strip of the reinforcing area of the rear panel is secured by means of heat sealing and/or adhesion to the inner or outer layer,
wherein the holding strap (20) joined to the front panel (6) via its first and second connecting areas (24A, 24B) and the holding strap (22) joined to the rear panel (8) via its first and second connecting area (26A, 26B) has, in the area from the respective first up to the second connecting area, at least in sections, a first flexible hose-like hollow body or a single- or multi-layered material strip, in particular a plastic material strip, not forming a hollow body, which is surrounded in sections or substantially completely by a second flexible hose-like hollow body.

2. A plastic carrier bag (1) having a closed or substantially closed bottom end (2) and an opposite opening end (4), comprising
a front panel (6) and a rear panel (8), each having a first side edge (10) and an opposite second side edge (12) as well as an opening edge (14) and a bottom edge (16),
wherein the front panel (6) and the rear panel (8) are joined to one another in the area of their first and second side edges (10,12) and their bottom edges (16) at least in sections directly or via side walls or side folds and/or a bottom fold, as well as at least one holding strap (20) joined to the front panel (6) and at least one holding strap (22) joined to the rear panel (8) with a first and a second connecting area (24A, 24B; 26A, 26B) respectively,
the front and the rear panel (6, 8) are designed to be multi-layered, comprising at least an internal layer and an outer layer (28, 30; 32, 34),
the front and the rear panel (6, 8) in the area of the opening end (4) have a reinforcing area (44, 46), containing at least one multi-layered plastic film strip secured on the inside or outside to the front panel (6) and at least one multi-layered plastic film strip secured on the inside or outside to the rear panel (8) and extending from or at a distance from the first side edge (10) in the direction of or up to the second side edge (12),
the holding strap joined to the front panel (6) and the holding strap joined to the rear panel (8) are heat-sealed and/or adhered respectively in their first and second connecting areas to the multi-layered plastic film strip of the reinforcing area and also to the at least one internal layer or the outer layer,
the multi-layered plastic film strip of the reinforcing area of the front panel is secured by means of heat sealing and/or adhesion to the inner or outer layer, and
wherein the multi-layered plastic film strip of the reinforcing area of the rear panel is secured by means of heat sealing and/or adhesion to the inner or outer layer,
wherein
an extension section (36) adjoins the outer layer (30, 34),
wherein the extension section comprises or forms the plastic film strip of the reinforcing area,
wherein this, in particular at least double-layered, extension section (36, 38) is heat-sealed and/or adhered along an extension from or at a distance from the first side edge (10) in the direction of or up to the second side edge (12) to the outside of the at least one internal layer (28, 32), in particular the inner layer, as well as, if applicable, to the outer layer, in particular with a continual longitudinal seal,
wherein the extension section (36) extends at least in sections along the outside of the at least one internal layer (28, 32) and bears on the latter or can be placed thereon.

3. A plastic carrier bag (1) having a closed or substantially closed bottom end (2) and an opposite opening end (4), comprising
a front panel (6) and a rear panel (8), each having a first side edge (10) and an opposite second side edge (12) as well as an opening edge (14) and a bottom edge (16),
wherein the front panel (6) and the rear panel (8) are joined to one another in the area of their first and second side edges (10,12) and their bottom edges (16) at least in sections directly or via side walls or side folds and/or a bottom fold, as well as at least one holding strap (20) joined to the front panel (6) and at least one holding strap (22) joined to the rear panel (8) with a first and a second connecting area (24A, 24B; 26A, 26B) respectively,
**characterized in that** the front and the rear panel (6, 8) are designed to be multi-layered, comprising at least an internal layer and an outer layer (28, 30; 32, 34), the front and the rear panel (6, 8) in the area of the opening end (4) have a reinforcing area (44, 46), containing
at least one multi-layered plastic film strip secured on the inside or outside to the front panel (6) and at least one multi-layered plastic film strip secured on the inside or outside to the rear panel (8) and extending from or at a distance from the first side edge (10) in the direction of or up to the second side edge (12),
wherein the holding strap joined to the front panel (6) and the holding strap joined to the rear panel (8) are heat-sealed and/or adhered respectively in their first and second connecting areas to the multi-layered plastic film strip of the reinforcing area and also to the at least one internal layer or the outer layer,
the multi-layered plastic film strip of the reinforcing area of the front panel is secured by means of heat sealing and/or adhesion to the inner or outer layer, and
the multi-layered plastic film strip of the reinforcing area of the rear panel is secured by means of heat sealing and/or adhesion to the inner or outer layer,
wherein
an extension section (36) adjoins the at least one internal layer,
wherein this extension section comprises or forms the plastic film strip of the reinforcing area,
wherein this, in particular at least double-layered, extension section (36, 38) is heat-sealed and/or adhered along an extension from or at a distance from the first side edge (10) in the direction of or up to the second side edge (12) to the outside of the at least one internal layer (28, 32), in particular the inner layer, as well as, if applicable, to the outer layer, in particular with a continual longitudinal seal,
wherein this extension section (36) extends at least in sections along the outside of the at least one internal layer (28, 32), and bears on the latter or can be placed thereon.

4. The plastic carrier bag (1) according to Claim 2 or 3, **characterized in that**
the holding strap (20) joined to the front panel (6) via its first and second connecting areas (24A, 24B) and the holding strap (22) joined to the rear panel (8) via its first and second connecting area (26A, 26B) has, in the area from the respective first up to the second connecting area, at least in sections, a first flexible hose-like hollow body or a single-or multi-layered material strip, in particular a plastic material strip, not forming a hollow body, which is surrounded in sections or substantially completely by a second flexible hose-like hollow body.

5. The plastic carrier bag (1) according to Claim 1, 2, 3 or 4, **characterized in that**
the holding strap joined to the front panel (6) and the holding strap joined to the rear panel (8) are each thermoplastically heat-sealed in their first and second connecting areas to the multi-layered plastic film strip of the reinforcing area and also to the at least one internal layer or the outer layer, or
the multi-layered plastic film strip of the reinforcing area of the front panel is secured to the inner or outer layer of or at a distance from the first side edge in the direction of or up to the second side edge by means of thermoplastic heat sealing, or the multi-layered plastic film strip of the reinforcing area of the rear panel is secured by means of thermoplastic heat sealing to the inner or outer layer of or at a distance from the first side edge in the direction of or up to the second side edge.

6. The plastic carrier bag (1) according to any one of the preceding claims,
**characterized in that**
the first and second connecting areas of the holding strap joined to the front panel (6) or the first and second connecting areas of the holding strap joined to the rear panel (8) are present on the inside of the front or respectively rear panel (8) in the area of the multi-layered plastic film strip of the reinforcing area.

7. The plastic carrier bag (1) according to any one of the preceding claims,
**characterized in that**
the front or the rear panel (6, 8) is designed to be double-layered or the multi-layered plastic film strip of the front or rear panel is designed to be double-layered.

8. The plastic carrier bag (1) according to any one of Claims 1 to 7, **characterized in that**
the at least one internal layer forms the inner layer.

9. The plastic carrier bag (1) according to any one of the preceding claims,
**characterized in that**
the reinforcing area of the front or rear panel extends up to the opening end or comprises the latter.

10. The plastic carrier bag (1) according to any one of the preceding claims,
**characterized in that**
the outer layer is based on or consists of an, at least in sections, transparent plastic material, in particular polyethylene, which is printable or printed at least in sections on the inside, or
the at least one internal layer is printable or printed, at least in sections, on the outside and the outer layer is based on or consists of an, at least in sections, transparent plastic material, in particular polyethylene.

11. The plastic carrier bag (1) according to Claim 2 or according to any one of Claims 4 to 10, if and inasmuch as they relate back directly or indirectly to Claim 2,
**characterized in that**
the extension section (36) present on the outside of the at least one internal layer (28, 32) is, at least in certain areas, designed to be at least double-layered, in particular by means of turning down,
and
wherein the outer layer (30, 34) comprises or forms the opening edge (14), wherein the at least one internal layer (28, 32) extends with its upper edge (40, 42) up to the opening edge (14) or at a distance herefrom.

12. The plastic carrier bag (1) according to Claim 3 or according to any one of Claims 4 to 10, if and inasmuch as they relate back directly or indirectly to Claim 3,
**characterized in that**
the extension section (36) present on the outside of the at least one internal layer (28, 32) is, at least in certain areas, designed to be at least double-layered, in particular by means of turning down.

13. The plastic carrier bag (1) according to Claim 2 or according to any one of Claims 4 to 10, if and inasmuch as they relate back directly or indirectly to Claim 2, or according to Claim 3 or according to any one of Claims 4 to 10, if and inasmuch as they relate back directly or indirectly to Claim 3, **characterized in that**
the outer layer and the extension section of the front panel (6) or of the rear panel (8) are designed in one piece or the at least one internal layer and the extension section of the front panel (6) or of the rear panel (8) are designed in one piece or the outer layers of the front and rear panel (8) are designed in one piece or the internal layers of the front and rear panel (8) are designed in one piece.

14. The plastic carrier bag (1) according to any one of the preceding claims,
**characterized in that**
the multi-layered plastic film strip of the reinforcing area is heat-sealed and/or adhered via all of its layers to the inside of the at least one internal layer along the extension of or at a distance from the first side edge in the direction of or up to the second side edge, in particular with a continual longitudinal seal, forming a first joining strip, wherein the distance of this first joining strip from the lower edge of the reinforcing area is preferably less than it is from the upper edge thereof, in particular on or adjacent to the lower edge of the reinforcing area.

15. The plastic carrier bag (1) according to any one of the preceding claims,
**characterized in that**
the outer layer of the front and/or rear panel (6, 8) is heat-sealed, in particular thermoplastically heat-sealed, and/or adhered, to the outside of the at least one internal layer along the extension of or at a distance from the first side edge in the direction of or up to the second side edge, in particular with a continual longitudinal seal, forming a second joining strip, wherein the distance of this second joining strip from the lower edge of the reinforcing area is preferably less than it is from the upper edge thereof, in particular on or adjacent to the lower edge of the reinforcing area.

16. The plastic carrier bag (1) according to any one of the preceding claims,
**characterized in that**
the first and second connecting areas of the holding straps joined to the front panel (6) or to the rear panel (8), which are obtained in particular by means of heat sealing, at a distance from the joining of the multi-layered plastic film strip of the reinforcing area of the front panel to the inner or outer layer or at a distance from the joining of the multi-layered plastic film strip of the reinforcing area of the rear panel to the inner or outer layer, in particular at a distance from the first and/or second joining strip, do not in particular have any overlapping with the first and, if applicable, second joining strip.

17. The plastic carrier bag (1) according to any one of the preceding claims,
**characterized in that**
the outer layer, the multi-layered plastic film strip of the reinforcing area, and the at least one internal layer of the front or rear panel (6, 8) as well as, if applicable, the holding straps joined to the front panel (6) or to the rear panel (8), in particular the first and/or second flexible plastic material strips thereof or the single- or multi-layered material strip not forming a hollow body, are formed from or consist of polyolefins, in particular polyethylene.

18. The plastic carrier bag (1) according to Claim 17, **characterized in that**
the at least one internal layer of the front and/or rear panel (6, 8) comprises or forms a foamed plastic film, preferably a foamed polyolefin film, particularly preferably a foamed polyethylene film and, in particular, a foamed LD-polyethylene film, or
the first flexible, in particular hose-shaped, hollow body or the single- or multi-layered material strip not forming a hollow body comprises or forms a foamed plastic film, preferably a foamed polyolefin film, particularly preferably a foamed polyethylene film and, in particular, a foamed LD-polyethylene film,
and wherein the outer layer of the front and rear panel (6, 8) preferably forms a non-foamed plastic film, preferably a non-foamed polyolefin film, particularly preferably a non-foamed polyethylene film and, in particular, a non-foamed LD-polyethylene film, or wherein the second flexible, in particular hose-shaped, hollow body, in particular the second flexible plastic material strip is based on or formed from a non-foamed plastic film, preferably a non-foamed polyolefin film, particularly preferably a non-foamed polyethylene film and, in particular, a non-foamed LD-polyethylene film.

19. The plastic carrier bag (1) according to any one of the preceding claims,
**characterized in that**
the outer layer, the multi-layer, plastic film strip of the reinforcing area and the at least one internal layer, in particular the inner layer, of the front and rear panel (8) as well as, if applicable, the holding straps joined to the front panel (6) and to the rear panel (8), in particular the first and/or second flexible plastic material strips thereof or the single- or multi-layered material strips thereof not forming a hollow body, are formed from or consist of polyethylene, in particular LD-polyethylene, wherein the at least one internal layer of the front and rear panel (8) forms a foamed polyethylene film, in particular a foamed LD-polyethylene film, and wherein the outer layer of the front and rear panel (6, 8), and, if applicable, the multi-layered plastic film strip of the reinforcing area forms a non-foamed polyethylene film, in particular a non-foamed LD-polyethylene film.

## Revendications

1. Sac en matière plastique (1) avec une extrémité servant de fond fermé ou sensiblement fermé (2) et une extrémité opposée servant d'ouverture (4), comprenant une paroi antérieure (6) et une paroi postérieure (8), respectivement avec un premier bord latéral (10) et un second bord latéral opposé (12) ainsi qu'un bord d'ouverture (14) et un bord de fond (16),
dans lequel la paroi antérieure (6) et la paroi postérieure (8) sont reliées l'une à l'autre au moins par endroits directement ou par des parois latérales ou des soufflets et / ou par un soufflet de fond au niveau de leurs premier et second bords latéraux (10,12) et de leurs bords de fond (16), ainsi
qu'au moins une poignée (20, 22) reliée à la paroi antérieure (6) et au moins une autre reliée à la paroi postérieure (8) avec respectivement une première et une seconde zones d'assemblage (24A, 24B ; 26A, 26B),
**caractérisé en ce que** la paroi antérieure et la paroi postérieure (6, 8) sont conçues en plusieurs couches, comprenant au moins une couche disposée à l'intérieur et une couche extérieure (28, 30 ; 32, 34),
la paroi antérieure et la paroi postérieure (6, 8) présentent une zone de renfort (44, 46) au niveau de l'extrémité servant d'ouverture (4), comportant
au moins une bande de film en matière plastique multicouche fixée intérieurement et extérieurement à la paroi antérieure (6) et au moins une autre fixée intérieurement et extérieurement à la paroi postérieure (8) et s'étendant ou à distance du premier bord latéral (10) vers le second bord latéral (12) ou jusqu'à celui-ci,
dans lequel la poignée reliée à la paroi antérieure (6) et celle reliée à la paroi postérieure (8) sont soudées et / ou collées respectivement dans leurs première et seconde zones d'assemblage à la bande de film en matière plastique multicouche de la zone de renfort et également au moins à ladite couche disposée à l'intérieur ou à ladite couche extérieure,
la bande de film en matière plastique multicouche de la zone de renfort de la paroi antérieure est fixée à la couche intérieure ou extérieure par soudage et / ou par collage et
la bande de film en matière plastique multicouche de la zone de renfort de la paroi postérieure est fixée à la couche intérieure ou extérieure par soudage et / ou par collage,
dans lequel
la poignée (20) reliée à la paroi antérieure (6) par le biais de ses première et seconde zones d'assemblage (24A, 24B) et la poignée (22) reliée à la paroi postérieure (8) par le biais de ses première et seconde zones d'assemblage (26A, 26B) présentent au moins par endroits au niveau respectivement de la première jusqu'à la seconde zone d'assemblage une première cavité tubulaire souple ou une bande de matériau à une ou plusieurs couches ne formant aucune cavité, notamment une bande en matière plastique, qui est enveloppée par endroits ou quasi complètement par une seconde cavité tubulaire souple.

2. Sac en matière plastique (1) avec une extrémité servant de fond fermé ou sensiblement fermé (2) et une extrémité opposée servant d'ouverture (4), comprenant une paroi antérieure (6) et une paroi postérieure (8), respectivement avec un premier bord latéral (10) et un second bord latéral opposé (12) ainsi qu'un bord d'ouverture (14) et un bord de fond (16),
dans lequel la paroi antérieure (6) et la paroi postérieure (8) sont reliées l'une à l'autre au moins par endroits directement ou par des parois latérales ou des soufflets et / ou par un soufflet de fond au niveau de leurs premier et second bords latéraux (10,12) et de leurs bords de fond (16), ainsi
qu'au moins une poignée (20, 22) reliée à la paroi antérieure (6) et au moins une autre reliée à la paroi postérieure (8) avec respectivement une première et une seconde zones d'assemblage (24A, 24B ; 26A, 26B),
**caractérisé en ce que** la paroi antérieure et la paroi postérieure (6, 8) sont conçues en plusieurs couches, comprenant au moins une couche disposée à l'intérieur et une couche extérieure (28, 30 ; 32, 34),
la paroi antérieure et la paroi postérieure (6, 8) présentent une zone de renfort (44, 46) au niveau de l'extrémité servant d'ouverture (4), comportant
au moins une bande de film en matière plastique multicouche fixée intérieurement et extérieurement à la paroi antérieure (6) et au moins une autre fixée intérieurement et extérieurement à la paroi postérieure (8) et s'étendant ou à distance du premier bord latéral (10) vers le second bord latéral (12) ou jusqu'à celui-ci,
dans lequel la poignée reliée à la paroi antérieure (6) et celle reliée à la paroi postérieure (8) sont soudées et / ou collées respectivement dans leurs première et seconde zones d'assemblage à la bande de film en matière plastique multicouche de la zone de renfort et également au moins à ladite couche disposée à l'intérieur ou à ladite couche extérieure,
la bande de film en matière plastique multicouche de la zone de renfort de la paroi antérieure est fixée à la couche intérieure ou extérieure par soudage et / ou par collage et
bande de film en matière plastique multicouche de la zone de renfort de la paroi postérieure est fixée à la couche intérieure ou extérieure par soudage et / ou par collage,
dans lequel
qu'un prolongement (36) se rattache à la couche extérieure (30, 34),
dans lequel le prolongement comprend ou constitue la bande de film en matière plastique de la zone de renfort,
dans lequel ce prolongement (36), notamment au moins à deux couches, est soudé et / ou collé, notamment par une soudure longitudinale continue, à la face extérieure de ladite au moins une couche disposée à l'intérieur (28, 32), notamment avec la couche disposée à l'intérieur, ainsi qu'éventuellement à la couche extérieure le long d'une extension ou à distance du premier bord latéral (10) vers le second bord latéral (12) ou jusqu'à celui-ci,
dans lequel le prolongement (36) s'étend au moins par endroits le long de la face extérieure de ladite couche disposée à l'intérieur (28, 32) au moins et y est appliqué ou applicable.

3. Sac en matière plastique (1) avec une extrémité servant de fond fermé ou sensiblement fermé (2) et une extrémité opposée servant d'ouverture (4), comprenant une paroi antérieure (6) et une paroi postérieure (8), respectivement avec un premier bord latéral (10) et un second bord latéral opposé (12) ainsi qu'un bord d'ouverture (14) et un bord de fond (16),
dans lequel la paroi antérieure (6) et la paroi postérieure (8) sont reliées l'une à l'autre au moins par endroits directement ou par des parois latérales ou des soufflets et / ou par un soufflet de fond au niveau de leurs premier et second bords latéraux (10,12) et de leurs bords de fond (16), ainsi
qu'au moins une poignée (20, 22) reliée à la paroi antérieure (6) et au moins une autre reliée à la paroi postérieure (8) avec respectivement une première et une seconde zones d'assemblage (24A, 24B ; 26A, 26B),
**caractérisé en ce que** la paroi antérieure et la paroi postérieure (6, 8) sont conçues en plusieurs couches, comprenant au moins une couche disposée à l'intérieur et une couche extérieure (28, 30 ; 32, 34),
la paroi antérieure et la paroi postérieure (6, 8) présentent une zone de renfort (44, 46) au niveau de l'extrémité servant d'ouverture (4), comportant
au moins une bande de film en matière plastique multicouche fixée intérieurement et extérieurement à la paroi antérieure (6) et au moins une autre fixée intérieurement et extérieurement à la paroi postérieure (8) et s'étendant ou à distance du premier bord latéral (10) vers le second bord latéral (12) ou jusqu'à celui-ci,
dans lequel la poignée reliée à la paroi antérieure (6) et celle reliée à la paroi postérieure (8) sont soudées et / ou collées respectivement dans leurs première et seconde zones d'assemblage à la bande de film en matière plastique multicouche de la zone de renfort et également au moins à ladite couche disposée à l'intérieur ou à ladite couche extérieure,
la bande de film en matière plastique multicouche de la zone de renfort de la paroi antérieure est fixée à la couche intérieure ou extérieure par soudage et / ou par collage et
la bande de film en matière plastique multicouche de la zone de renfort de la paroi postérieure est fixée à la couche intérieure ou extérieure par soudage et / ou par collage,
dans lequel
qu'un prolongement (36) se rattache à ladite couche intérieure au moins,
dans lequel le prolongement comprend ou constitue la bande de film en matière plastique de la zone de renfort,
dans lequel ce prolongement (36), notamment au moins à deux couches, est soudé et / ou collé, notamment par une soudure longitudinale continue, à la face extérieure de ladite au moins une couche disposée à l'intérieur (28, 32), notamment avec la couche disposée à l'intérieur, ainsi qu'éventuellement à la couche extérieure le long d'une extension ou à distance du premier bord latéral (10) vers le second bord latéral (12) ou jusqu'à celui-ci,
dans lequel ce prolongement (36) s'étend au moins par endroits le long de la face extérieure de ladite couche disposée à l'intérieur (28, 32) au moins et y est appliqué ou applicable.

4. Sac en matière plastique (1) selon la revendication 2 ou 3, **caractérisé en ce que** la poignée (20) reliée à la paroi antérieure (6) par le biais de ses première et seconde zones d'assemblage (24A, 24B) et la poignée (22) reliée à la paroi postérieure (8) par le biais de ses première et seconde zones d'assemblage (26A, 26B) présentent au moins par endroits au niveau respectivement de la première jusqu'à la seconde zone d'assemblage une première cavité tubulaire souple ou une bande de matériau à une ou plusieurs couches ne formant aucune cavité, notamment une bande en matière plastique, qui est enveloppée par endroits ou quasi complètement par une seconde cavité tubulaire souple.

5. Sac en matière plastique (1) selon la revendication 1, 2, 3 ou 4, **caractérisé en ce que**
la poignée reliée à la paroi antérieure (6) et celle reliée à la paroi postérieure (8) sont jointes par soudure thermoplastique respectivement dans leurs première et seconde zones d'assemblage à la bande de film en matière plastique multicouche de la zone de renfort et également au moins à ladite couche disposée à l'intérieur ou à la couche extérieure ou que
la bande de film en matière plastique multicouche de la zone de renfort de la paroi antérieure est fixée par soudure thermoplastique à la couche intérieure ou extérieure partant ou à distance du premier bord latéral vers le second bord latéral ou jusqu'à celui-ci ou que
la bande de film en matière plastique multicouche de la zone de renfort de la paroi postérieure est fixée par soudure thermoplastique à la couche intérieure ou extérieure partant ou à distance du premier bord latéral vers le second bord latéral ou jusqu'à celui-ci.

6. Sac en matière plastique (1) selon l'une des revendications précédentes, **caractérisé en ce que**
les première et seconde zones d'assemblage de la poignée reliée à la paroi antérieure (6) ou les première et seconde zones d'assemblage de la poignée reliée à la paroi postérieure (8) sont présentes sur la face intérieure de la paroi antérieure ou postérieure (8) au niveau de la bande de film en matière plastique multicouche de la zone de renfort.

7. Sac en matière plastique (1) selon l'une des revendications précédentes, **caractérisé en ce que**
la paroi antérieure ou postérieure (6, 8) est conçue en deux couches ou que la bande de film en matière plastique multicouche de la paroi antérieure ou postérieure est conçue en deux couches.

8. Sac en matière plastique (1) selon l'une des revendications 1 à 7, **caractérisé en ce que**
ladite couche disposée à l'intérieur au moins constitue la couche intérieure.

9. Sac en matière plastique (1) selon l'une des revendications précédentes, **caractérisé en ce que**
la zone de renfort de la paroi antérieure ou postérieure s'étend jusqu'à l'extrémité servant d'ouverture ou la renferme.

10. Sac en matière plastique (1) selon l'une des revendications précédentes, **caractérisé en ce que**
la couche extérieure est à base au moins par endroits d'une matière plastique transparente, notamment du polyéthylène, ou en est constituée, qui est imprimée ou imprimable au moins par endroits sur sa face intérieure ou que
ladite couche disposée à l'intérieur au moins est imprimée ou imprimable au moins par endroits sur sa face extérieure et que le la couche extérieure est à base au moins par endroits d'une matière plastique transparente, notamment du polyéthylène, ou en est constituée.

11. Sac en matière plastique (1) selon la revendication 2 ou selon l'une des revendications 4 à 10, si et dans la mesure où il se réfère directement ou indirectement à la revendication 2, **caractérisé en ce que**
le prolongement (36) existant sur la face extérieure de ladite couche disposée à l'intérieure (28, 32) au moins, notamment moyennant un rabattement, est conçu au moins par zones au moins en deux couches, et
dans lequel la couche extérieure (30, 34) comprend ou forme le bord d'ouverture (14), dans lequel ladite couche disposée à l'intérieur (28, 32) au moins avec son bord supérieur (40, 42) s'étend jusqu'au bord de l'ouverture (14) ou à distance de celui-ci.

12. Sac en matière plastique (1) selon la revendication 3 ou selon l'une des revendications 4 à 10, si et dans la mesure où il se réfère directement ou indirectement à la revendication 3, **caractérisé en ce que**
le prolongement (36) existant sur la face extérieure de ladite couche disposée à l'intérieur (28, 32) au moins, notamment moyennant un rabattement, est conçu au moins par zones au moins en deux couches.

13. Sac en matière plastique (1) selon la revendication 2 ou selon l'une des revendications 4 à 10, si et dans la mesure où il se réfère directement ou indirectement à la revendication 2, ou selon la revendication 3 ou selon l'une des revendications 4 à 10, si et dans la mesure où il se réfère directement ou indirectement à la revendication 3, **caractérisé en ce que**
la couche extérieure et le prolongement de la paroi antérieure (6) ou de la paroi postérieure (8) sont conçus d'un seul tenant ou que ladite couche disposée à l'intérieur au moins et le prolongement de la paroi antérieure (6) ou de la paroi postérieure (8) sont conçus d'un seul tenant ou que les couches extérieures de la paroi antérieure et postérieure (8) sont conçues d'un seul tenant ou que les couches intérieures de la paroi antérieure et postérieure (8) sont conçues d'un seul tenant.

14. Sac en matière plastique (1) selon l'une des revendications précédentes, **caractérisé en ce que**
la bande de film en matière plastique multicouche de la zone de renfort est soudée et / ou collée par le biais de toutes ses couches à la face intérieure de ladite couche disposée à l'intérieur au moins le long de l'extension ou à distance du premier bord latéral vers le second bord latéral ou jusqu'à celui-ci, notamment par une soudure longitudinale moyennant la formation d'une première bande de jonction, dans lequel cette première bande de jonction se trouve de préférence à une distance plus rapprochée du bord inférieur de la zone de renfort que de son bord supérieur, notamment sur le bord inférieur de la zone de renfort ou l'avoisinant.

15. Sac en matière plastique (1) selon l'une des revendications précédentes, **caractérisé en ce que**
la couche extérieure de la paroi antérieure et / ou postérieure (6, 8) est soudée, notamment par une soudure longitudinale moyennant la formation d'une seconde bande de jonction, notamment jointe par soudure thermoplastique et / ou collée à la face extérieure de ladite couche disposée à l'intérieur au moins le long de l'extension ou à distance du premier bord latéral vers le second bord latéral ou jusqu'à celui-ci, dans lequel cette seconde bande de jonction se trouve de préférence à une distance plus rapprochée du bord inférieur de la zone de renfort que de son bord supérieur, notamment sur le bord inférieur de la zone de renfort ou l'avoisinant.

16. Sac en matière plastique (1) selon l'une des revendications précédentes, **caractérisé en ce que**
les premières zones d'assemblage obtenues notamment par soudage des poignées reliées à la paroi antérieure (6) ou à la paroi postérieure (8) sont situées à distance de la jonction de la bande de film en matière plastique multicouche de la zone de renfort de la paroi antérieure avec la couche intérieure ou extérieure ou à distance de la jonction de la bande de film en matière plastique multicouche de la zone de renfort de la paroi postérieure avec la couche intérieure ou extérieure, notamment à distance de la première et / ou de la seconde bande de jonction, notamment ne présentent aucun recouvrement avec la première et éventuellement la seconde bande de jonction.

17. Sac en matière plastique (1) selon l'une des revendications précédentes, **caractérisé en ce que**
la couche extérieure, la bande de film en matière plastique multicouche de la zone de renfort et ladite couche disposée à l'intérieur au moins de la paroi antérieure ou postérieure (6, 8) ainsi qu'éventuellement les poignées reliées à la paroi antérieure (6) ou à la paroi postérieure (8), notamment leurs premières et / ou secondes bandes en matière plastique souples ou la bande de matériau à une ou plusieurs couches ne formant aucune cavité, sont formées ou constituées de polyoléfines, notamment de polyéthylène.

18. Sac en matière plastique (1) selon la revendication 17, **caractérisé en ce que** ladite couche disposée à l'intérieur au moins de la paroi antérieure et / ou postérieure (6, 8) comprend ou constitue un film en matière plastique expansé, de préférence un film en polyoléfine expansé, mieux encore un film en polyéthylène expansé et notamment un film en polyéthylène bd expansé, ou que
la première cavité souple, notamment tubulaire, ou la bande de matériau à une ou plusieurs couches ne formant aucune cavité comprend ou constitue un film en matière plastique expansé, de préférence un film en polyoléfine expansé, mieux encore un film en polyéthylène expansé et notamment un film en polyéthylène bd expansé,
et dans lequel de préférence la couche extérieure de la paroi antérieure ou postérieure (6, 8) constitue un film en matière plastique non expansé, de préférence un film en polyoléfine non expansé, mieux encore un film en polyéthylène non expansé et notamment un film en polyéthylène bd non expansé ou dans lequel de préférence la seconde cavité souple, notamment tubulaire, notamment la seconde bande en matière plastique souple est à base d'un film en matière plastique non expansé, de préférence d'un film en polyoléfine non expansé, mieux encore d'un film en polyéthylène non expansé et notamment d'un film en polyéthylène bd non expansé ou en est constituée.

19. Sac en matière plastique (1) selon l'une des revendications précédentes, **caractérisé en ce que**
la couche extérieure, la bande de film en matière plastique multicouche de la zone de renfort et ladite couche disposée à l'intérieur au moins, notamment la couche intérieure, de la paroi antérieure et postérieure (8) ainsi qu'éventuellement les poignées reliées à la paroi antérieure (6) et à la paroi postérieure (8), notamment leurs premières et / ou secondes bandes en matière plastique souples ou leur bande de matériau à une ou plusieurs couches ne formant aucune cavité, sont formées ou constituées de polyéthylène, notamment de polyéthylène bd, dans lequel ladite couche disposée à l'intérieur au moins de la paroi antérieure et postérieure (8) constitue un film en polyéthylène expansé, notamment un film en polyéthylène bd expansé, et dans lequel la couche extérieure de la paroi antérieure et postérieure (6, 8) et éventuellement la bande de film en matière plastique multicouche de la zone de renfort constituent un film en polyéthylène non expansé, notamment un film en polyéthylène bd non expansé.
